# EUROPÄISCHE PATENTSCHRIFT

(11) **EP 2 234 816 B1**
(45) Veröffentlichungstag und Bekanntmachung des Hinweises auf die Patenterteilung: **05.11.2014**
(21) Anmeldenummer: 08860042.4
(22) Anmeldetag: 09.12.2008
(51) Int. Cl.: B42D 15/00, B42D 25/00

(54) **OPTISCH VARIABLES SICHERHEITSELEMENT**
OPTICALLY VARIABLE SECURITY ELEMENT
ÉLÉMENT DE SÉCURITÉ OPTIQUEMENT VARIABLE

(30) Priorität: 11.12.2007 DE 102007059550
(43) Veröffentlichungstag der Anmeldung: 06.10.2010
(73) Patentinhaber: Giesecke & Devrient GmbH, 81677 München (DE)
(72) Erfinder: MENGEL, Christoph, 83607 Holzkirchen (DE); BORNSCHLEGL, Alexander, 81735 München (DE)
(86) Internationale Anmeldenummer: PCT/EP2008/010428
(87) Internationale Veröffentlichungsnummer: WO 2009/074284

(56) Entgegenhaltungen:
- EP-A- 1 541 642
- EP-A- 1 669 213
- EP-A- 1 806 238
- WO-A-03/089250
- WO-A-2004/024836

## Beschreibung

Die Erfindung betrifft ein optisch variables Sicherheitselement zur Absicherung von Wertgegenständen. Die Erfindung betrifft ferner ein Verfahren zur Herstellung eines derartigen Sicherheitselements, eine Sicherheitsanordnung mit einem solchen Sicherheitselement, einen entsprechend ausgestatteten Datenträger und eine Verifikationseinrichtung für ein solches Sicherheitselement.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente, die betrachtungswinkelabhängige visuelle Effekte zeigen, da diese selbst mit modernsten Kopiergeräten nicht reproduziert werden können. Die Sicherheitselemente werden dazu mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen.

In diesem Zusammenhang ist bekannt, Sicherheitselemente mit mehrschichtigen Dünnschichtelementen einzusetzen, deren Farbeindruck sich für den Betrachter mit dem Betrachtungswinkel ändert, und beim Kippen des Sicherheitsmerkmals beispielsweise von Grün nach Blau, von Blau nach Magenta oder von Magenta nach Grün wechselt. Das Auftreten derartiger Farbänderungen beim Verkippen eines Sicherheitselements wird im Folgenden als Farbkippeffekt bezeichnet.

Aus der Druckschrift WO 03/089250 A2 ist ein optisch Variables Sicherheitselement bekannt.

Aus der Druckschrift WO 02/073250 A2 sind optisch variable Dünnschichtelemente bekannt, in deren Schichtaufbau zumindest eine Magnetschicht integriert ist. Die magnetischen Eigenschaften dieser optisch variablen Dünnschichtelemente können dann als zusätzliches Echtheitskennzeichen verwendet werden.

In der Druckschrift EP 1 780 040 A2 ist ein Sicherheitselement beschrieben, bei dem in einem Teilbereich magnetisch ausgerichtete Pigmentteilchen vorliegen, die einen kinematischen visuellen Effekt erzeugen. Die magnetisch ausgerichteten Pigmentteilchen können dabei insbesondere auch optisch variable Eigenschaften aufweisen.

Ausgehend davon liegt der Erfindung die Aufgabe zugrunde, ein Sicherheitselement der eingangs genannten Art weiter zu verbessern und insbesondere ein Sicherheitselement mit einem attraktiven visuellen Erscheinungsbild und hoher Fälschungssicherheit zu schaffen, dessen Erscheinungsbild zudem bei der Echtheitsprüfung interaktiv beeinflusst werden kann.

Diese Aufgabe wird durch das Sicherheitselement mit den Merkmalen des Hauptanspruchs gelöst. Ein Verfahren zur Herstellung eines derartigen Sicherheitselements, eine Sicherheitsanordnung mit einem solchen Sicherheitselement, ein entsprechend ausgestatteter Datenträger und eine Verifikationseinrichtung für ein solches Sicherheitselement sind in den nebengeordneten Ansprüchen angegeben. Weiterbildungen der Erfindung sind Gegenstand der abhängigen Ansprüche.

Gemäß der Erfindung weist ein gattungsgemäßes Sicherheitselement eine optisch variable Farbschicht auf, die erste, optisch variable Effektpigmente zur Erzeugung eines betrachtungswinkelabhängigen visuellen Eindrucks enthält, und die zweite, durch ein äußeres Magnetfeld reversibel ausrichtbare Effektpigmente enthält, und bei der der Grad der Ausprägung des betrachtungswinkelabhängigen visuellen Eindrucks der optisch variablen Effektpigmente von der Orientierung der magnetisch ausrichtbaren Effektpigmente relativ zur Ebene der Farbschicht abhängt.

Ein solches Sicherheitselement bietet eine Kombination attraktiver visueller Effekte, nämlich einerseits des optisch variablen Effekts der ersten Effektpigmente und andererseits der reversiblen magnetischen Ausrichtbarkeit der zweiten Effektpigmente, durch die, wie nachfolgend genauer geschildert, interaktiv dreidimensional anmutende Erscheinungsbilder erzeugt werden können, die gegebenenfalls zusammen mit weiteren Informationen reversibel zum Erscheinen und wieder zum Verschwinden gebracht werden können. In einer Weiterbildung der Erfindung können die zweiten Effektpigmente durch einen aktivierbaren Fixierstoff zu einem späteren Zeitpunkt ganz oder teilweise in einer gewünschten Position fixiert werden, so dass das Sicherheitselement insbesondere nachträglich mit einer individuellen Kennzeichnung versehen werden kann, wie weiter unten genauer erläutert.

Die beiden Effekte treten dabei erfindungsgemäß in Wechselwirkung, indem die Ausprägung des optisch variablen Effekts von der Orientierung der magnetisch ausrichtbaren Effektpigmente abhängt. Die interaktive Beeinflussung der magnetischen Pigmente bringt daher nicht nur zuvor unsichtbare Erscheinungsbilder und gegebenenfalls weitere Informationen zum Vorschein, sondern verändert auch die Stärke und Brillanz des optisch variablen Effekts.

Um eine reversible magnetische Ausrichtbarkeit der Pigmente zu gewährleisten, sind die zweiten Effektpigmente bevorzugt in einer Mikrokapsel verkapselt und in der Mikrokapsel im Wesentlichen frei drehbar. Ohne äußeres Magnetfeld sind die zweiten Effektpigmente dabei vorzugsweise innerhalb der Mikrokapsel isotrop ausgerichtet, weisen also als Gesamtheit keine Vorzugsrichtung auf. Dabei können in der Praxis natürlich gewisse Abweichungen von der idealen isotropen Ausrichtung auftreten, abhängig beispielsweise von der geometrischen Form, der Magnetisierbarkeit, der Viskosität der Verkapselungsflüssigkeit oder der Struktur der Verkapselung.

Nach dem-Anlegen eines äußeren Magnetfelds richten sich die zweiten Effektpigmente zunächst rasch aus und kehren nach Wegfall des äußeren Magnetfelds wieder in ihren Ausgangszustand zurück. Ohne Rückstellkraft bzw. ohne andere externe Kräfte kann diese Rückkehr teilweise sehr lange dauern und einige Minuten, Stunden oder sogar Tage in Anspruch nehmen. Innerhalb dieses Zeitraums bleibt ein von dem Sicherheitselement angezeigtes Magnetisierungsmuster auch nach dem Entfernen des Verifikationsmagneten zunächst sichtbar und geht nur dann zurück, wenn eine aktive Bewegung mit einem externen Magneten die Orientierung der zweiten Effektpigmente wieder aufhebt oder ändert.

Um die Rückkehr in den Ausgangszustand zu beschleunigen, können die Mikrokapseln in zweckmäßigen Gestaltungen ein Gel enthalten, das eine Rückstellkraft für die magnetisch ausrichtbaren Effektpigmente bereitstellt. Dazu kann beispielsweise eine transparente polymerisierbare Substanz, die bevorzugt eine Mischung von photovernetzbaren Mono- und Oligomeren und einem geeigneten Lösungsmittel ist, in die Mikrokapseln eingebracht sein und durch Vernetzung gezielt eine gelartige Struktur in den Mikrokapseln erzeugt werden, die einerseits eine Drehung der Effektpigmente durch ein externes Feld zulässt und die andererseits bei einer erfolgten Drehung eine Rückstellkraft erzeugt, die die Effektpigmente nach einem Wegfall des externen Felds rasch in ihre Ausgangslage zurückkehren lässt. Eine solche Rückstellkraft kann in einer anderen Ausgestaltung auch durch eine Vormagnetisierung einer mit der optisch variablen Farbschicht kombinierten Magnetschicht erzeugt werden.

In einer vorteilhaften Ausgestaltung der Erfindung liegen die ersten Effektpigmente außerhalb der Mikrokapseln der zweiten Effektpigmente vor. Alternativ können die ersten Effektpigmente auch gemeinsam mit den zweiten Effektpigmenten in den Mikrokapseln verkapselt sein. Die ersten Effektpigmente sind in diesem Fall mit Vorteil plättchenförmig ausgebildet. Da sich in dieser Ausgestaltung die Ausrichtung der ersten Effektpigmente ebenfalls ändert, wenn die magnetischen zweiten Effektpigmente ausgerichtet werden, können durch die gemeinsame Verkapselung dynamische, interaktive Farbeffekte erzeugt werden. In einer speziellen Variante sind die ersten und zweiten Effektpigmente durch dieselben magnetisch ausrichtbaren und optisch variablen Effektpigmente gebildet.

Die zweiten Effektpigmente sind bevorzugt auf Basis von hochreinem Eisenpulver gebildet und können beispielsweise aus reduzierend behandeltem Carbonyleisenpulver hergestellt sein. Vorteilhafte plättchenförmige Eisenpigmente können insbesondere der Druckschrift EP 1 251 152 B1 entnommen werden, deren Offenbarung zur Herstellung und Eigenschaften solcher Pigmente in die vorliegende Beschreibung aufgenommen wird.

Die zweiten Effektpigmente können dabei weichmagnetisch oder hartmagnetisch sein. Bevorzugt sind die zweiten Effektpigmente nicht-sphärisch, beispielsweise nadelförmig ausgebildet. Besonders bevorzugt sind dabei Effektpigmente, die eine Plättchenform aufweisen. Nachfolgend wird der größte Durchmesser eines nicht-sphärischen Pigments auch als die Länge oder Größe des Pigments bezeichnet, während der kleinste Durchmesser als Dicke des Pigments bezeichnet wird.

Das Verhältnis des größten zum kleinsten Durchmesser der nicht-sphärischen zweiten Effektpigmente beträgt vorzugsweise mehr als 5:1, bevorzugt mehr als 10:1. Besonders bevorzugt liegt dieses Verhältnis zwischen 40:1 und 400:1. Der größte Durchmesser der nicht-sphärischen zweiten Effektpigmente beträgt mit Vorteil mehr als 2 µm, bevorzugt mehr als 5 µm, besonders bevorzugt mehr als 10 µm und ganz besonders bevorzugt mehr als 15 µm. Die Verwendung von magnetisch ausrichtbaren Effektpigmenten im Mikrometerbereich und insbesondere im genannten Größenbereich hat insbesondere den Vorteil, dass die Teilchenkonzentration verglichen mit Nanopartikeln geringer gehalten werden kann.

Plättchenförmige Effektpigmente, insbesondere im bevorzugten Größenbereich und im bevorzugten Durchmesser-zu-Dicken-Bereich können durch ein externes Magnetfeld relativ zur Schichtebene nach Wunsch orientiert werden. Sie geben dann, wie die Lamellen einer Jalousie, je nach Orientierung den Blick auf darunterliegende Schichten entweder weitgehend frei (annähernd senkrechte Orientierung relativ zur Schichtebene) oder blockieren ihn teilweise (schräge Orientierung relativ zur Schichtebene) oder vollständig (im Wesentlichen waagrechte Orientierung relativ zur Schichtebene). Bei hohen Durchmesser-zu-Dicken-Verhältnissen lassen sich so hohe Kontraste zwischen transluzenten und deckenden Schichtbereichen einstellen.

Im Rahmen der vorliegenden Beschreibung bedeutet "transluzent" dabei durchscheinend im Sinn einer gewissen oder vollständigen Lichtdurchlässigkeit und schließt somit auch Transparenz mit ein. Eine transluzente Schicht erlaubt es, die hinter bzw. unter ihr befindlichen Objekte wahrzunehmen, auch wenn durch die transluzente Schicht die Helligkeit der Objekte reduziert und/oder die Farbe der Objekte verändert sein kann. Ist die Lichtdurchlässigkeit einer Schicht dagegen so gering, dass die hinter bzw. unter ihr befindlichen Objekte nicht mehr erkennbar sind, ist sie nicht mehr transluzent, sondern wird als opak oder deckend bezeichnet.

Anstatt nicht-sphärische, insbesondere plättchenförmige zweite Effektpigmente einzusetzen, kann auch vorgesehen sein, dass die zweiten Effektpigmente durch in Mikrokapseln vorliegende, isotrope Partikel gebildet sind, die sich durch ein äußeres Magnetfeld in den Mikrokapseln kooperativ, also z. B. kettenförmig ausrichten. Auf diese Weise lassen sich ebenfalls dynamische optische Effekte erzeugen. Die isotropen Partikel können dabei als nanoskalische Partikel mit einer Teilchengröße von 1 nm bis zu 1 µm ausgebildet sein, oder können alternativ Teilchengrößen von mehr als 1 µm aufweisen, wobei die Teilchengröße insbesondere zwischen 1 µm und 20 µm, vorzugsweise zwischen 2 µm und 10 µm liegt. Der Durchmesser der Mikrokapseln liegt mit Vorteil zwischen 1 µm und 200 µm, insbesondere zwischen 5 µm und 80 µm, und wird vorzugsweise so mit der Teilchengröße der isotropen Partikel abgestimmt, dass sich bei der magnetischen Ausrichtung jeweils mehrere isotrope Partikel in den Mikrokapseln kooperativ, insbesondere kettenförmig aneinanderlegen können.

In einer vorteilhaften Weiterbildung der Erfindung sind die zweiten Effektpigmente durch beschichtete Eisenpigmente gebildet. Die Eisenpigmente weisen dabei insbesondere die Zusammensetzung FeOₓ mit x zwischen 1,3 und 1,5 auf. Durch die Beschichtung werden die zweiten Effektpigmente neben ihrer magnetischen Ausrichtbarkeit mit einer weiteren gewünschten Eigenschaft versehen. Im einfachsten Fall handelt es sich bei der Beschichtung um eine farbgebende Beschichtung, die beispielsweise gelbe, grüne und/oder blaue organische und/oder anorganische Farbmittel und vorzugsweise zusätzlich ein Weißpigment mit hohem Streuvermögen enthält. Auch andere Beschichtungen, wie etwa lasermarkierbare, fluoreszierende oder phosphoreszierende Beschichtungen kommen in Betracht, um den Effektpigmenten die jeweiligen Eigenschaften zu verleihen.

Die Verkapselung der zweiten Effektpigmente kann beispielsweise dadurch erfolgen, dass Eisenpigmente geeigneter Größe, etwa im Größenbereich von 10 µm bis 20 µm ausgewählt werden, in einem wasserunlöslichen Lösemittel dispergiert werden, geeignete mizellare Vorstufen mit kontrollierter Teilchengröße in Wasser dargestellt werden und diese beispielsweise mit acrylierter Gelatine durch Koazervation verkapselt werden. Allgemeine Informationen zur Mikroverkapselung und zur Koazervation können z. B. der EP 1479 432 B1 entnommen werden.

Für die Verkapselung sind selbstverständlich auch andere Verfahren, wie etwa Emulsionspolymerisation mit Acrylaten, Methacrylaten oder Styrol möglich.

Die in dieser Anmeldung beschriebenen Mikrokapseln können aus einer Vielzahl unterschiedlicher organischer oder anorganischer Materialien bestehen. Um die benötigten optischen und mechanischen Eigenschaften sicherzustellen, kann insbesondere das Kapselmaterial, bei Verwendung von Polymeren auch deren Vernetzungsgrad, und die Wandstärke der Mikrokapseln angepasst werden. Vorteilhafte Kapselmaterialien sind beispielsweise Gelatine, modifizierte Gelatine, insbesondere mit chemischer Nachvemetzung, PMMA und andere Polyacrylate, die vor allem wegen ihrer hohen Transparenz gut geeignet sind, Polyurethane, Polyamide, Melanin/Formaldehyd, Silikone, aber auch anorganische oxidische Materialien, wie etwa Silikate, Titan-, Hafnium- oder Eisenoxide.

Der Durchmesser der Mikrokapseln liegt erfindungsgemäß mit Vorteil zwischen etwa 1 µm und etwa 200 µm, insbesondere zwischen etwa 1 µm und etwa 80 µm. Die Wandstärke der Mikrokapseln liegt typischerweise zwischen 5 % und 30 %, vorzugsweise zwischen 10 % und 20 % des Durchmessers der Mikrokapseln.

Die ersten Effektpigmente sind mit Vorteil auf der Basis von flüssigkristallinen Polymeren hergestellte Pigmente oder sogenannte Perlglanzpigmente, wie etwa die von der Firma Merck KGaA unter der Bezeichnung Iriodin(R) oder Colorcrypt vertriebenen Silberweiß-, Goldglanz- oder Metallglanzpigmente. Sowohl Pigmente auf der Basis von flüssigkristallinem Material als auch Perlglanzpigmente sind für sich genommen transluzent. In anderen, ebenfalls vorteilhaften Ausgestaltung der Erfindung sind die ersten Effektpigmente durch Interferenzschichtpigmente gebildet. Derartige Interferenzschichtpigmente weisen typischerweise einen Dünnschichtaufbau auf, der zweckmäßig zumindest eine Reflexionsschicht, eine Absorberschicht und eine zwischen der Reflexionsschicht und der Absorberschicht angeordnete dielektrische Abstandsschicht enthält. Interferenzschichtpigmente können für sich genommen transluzent sein, wenngleich auch opake Interferenzschichtpigmente bekannt sind.

In einer Weiterbildung der Erfindung sind die zweiten Effektpigmente in Mikrokapseln verkapselt, wobei die Mikrokapseln einen aktivierbaren Fixierstoff enthalten, durch dessen Aktivierung die zweiten Effektpigmente in einer gewünschten Position fixierbar sind. Eine solche Gestaltung ermöglicht es, die zweiten Effektpigmente zu einem späteren Zeitpunkt teilweise oder vollständig in einer gewünschten Position zu fixieren, um beispielsweise eine individuelle Kennzeichnung in das Sicherheitselement einzubringen. Eine verdruckte Schicht mit den zweiten Effektpigmenten kann dadurch auch nach dem Trocknen der Schicht noch magnetisch ausgerichtet und etwa durch lokale UV-Bestrahlung oder durch lokale Laserbestrahlung in Teilbereichen in Form von Mustern, Zeichen oder einer Codierung in einer gewünschten Position fixiert werden.

Werden die zweiten Effektpigmente nur in Teilbereichen nachträglich fixiert, so entsteht ein Kombinationseffekt, bei dem die nicht fixierten Bereiche reversibel auf äußere Magnetfelder reagieren, während die magnetische Ausrichtung in den beispielsweise mit UV- oder Laserstrahlung beaufschlagten Bereichen dauerhaft fixiert ist.

In einer vorteilhaften Ausgestaltung enthalten die Mikrokapseln dabei als aktivierbaren Fixierstoff eine transparente polymerisierbare Mischung oder Substanz und zur Aktivierung des Fixierstoffs einen Initiator, vorzugsweise einen Photoinitiator. Bei der Mikroverkapselung, die vorzugsweise über kolloidale Koazervation oder Mikroemulsionspolymerisation erfolgt, können die zweiten Effektpigmente dazu beispielsweise in einem aus Mono- und Oligomeren und Photoinitiator bestehenden 100 %-System suspendiert werden. Die Polymerisationsbedingungen, wie etwa Mizellen- bzw. Tropfengröße, werden dabei so gewählt, dass Mikrokapseln der gewünschten Größe (1 µm bis 200 µm, vorzugsweise 5 µm bis 80 µm) entstehen. Die Viskosität der Mischung kann sowohl durch die Wahl der Art der Mono- bzw. Oligomere als auch durch die Variation ihres Verhältnisses angepasst werden.

Durch geeignete Wahl der Polymerisationsbedingungen können sowohl Mikrokapseln mit vollständig fixierten Effektpigmenten erzeugt werden, als auch Mikrokapseln mit Gelstrukturen, die bevorzugt aus einer Mischung von photopolymerisierbaren Mono- und Oligomeren und einem geeigneten Lösemittel bestehen, in denen die Effektpigmente durch ein äußeres Magnetfeld noch gedreht werden können und bei denen die Gelstruktur eine Rückstellkraft auf die gedrehten Effektpigmente ausübt, wie weiter oben genauer erläutert.

Alternativ können die Mikrokapseln auch eine weitgehend inerte Füllung mit zugefügten, kurzen, kettenförmigen reaktiven Molekülen enthalten, die bei Bestrahlung mit sich selbst und mit der Kapselwand vernetzen und das in der Mikrokapsel enthaltene Effektpigment in seiner Lage fixieren.

Nach einer weiteren Möglichkeit können in die Mikrokapseln auch laserzerstörbare Nanokapseln mit einem Polymerisationsstarter eingebracht werden, so dass die Fixierung durch Laserstrahlung ausgelöst werden kann.

In einer weiteren Variante enthalten die Mikrokapseln Flüssigkeiten oder Pigmente, die durch Laserstrahlung zersetzt werden können und beispielsweise aufschäumen. Die in den Mikrokapseln enthaltenen Effektpigmente werden dabei durch die resultierende Volumenvergrößerung des Fixierstoffs in ihrer Lage dauerhaft fixiert. Ein Vorteil einer solchen Variante besteht darin, dass es nicht zu einer nachträglichen Vernetzung, etwa durch Austreten von Polymerisationsstarter oder durch UV-Licht, kommen kann.

Beispiele für aktivierbare Fixierstoffe, die sich zum Aufschäumen durch die Einwirkung von Laserstrahlung und/ oder durch hohe Temperatur eignen, sind Polymere, wie POM (Polyoxymethylen), PMMA (Polymethylmethacrylat) oder PA (Polyamid), die aufgrund ihrer Zersetzungseigenschaften bereits ohne weitere Zusätze zum Aufschäumen neigen. Darüber hinaus können auch andere Kunststoffe, wie etwa Polystyrol, Polyester oder PET, verwendet werden, die zur Erzeugung der gewünschten Aufschäumbarkeit mit einem Treibmittel versetzt werden. Als Treibmittel kommen beispielsweise Natriumcarbonat, Diphenyloxid-4-4'-disulphohydrazid oder die Treibmittel der Produktserien Genitron(R) oder Ficel(R) der Firma Lanxess in Frage. Alternativ können auch aufschäumbare Hohlkammerkugeln eingesetzt werden. Um die Laserempfindlichkeit der aufschäumbaren Polymere zu erhöhen, können zusätzlich Absorber für den Wellenlängenbereich des verwendeten Lasers zugefügt sein.

In einer vorteilhaften Weiterbildung der Erfindung kann die optisch variable Farbschicht weiter dritte, unverkapselte und magnetisch ausrichtbare Effektpigmente enthalten, die magnetisch in Form eines vorgegeben Motivs in Form von Mustern, Linien, Zeichen oder einer Codierung ausgerichtet sind. Anders als die Ausrichtung der zweiten Effektpigmente ist die Ausrichtung der dritten Effektpigmente dabei dauerhaft fixiert. Für die dritten Effektpigmente kommen bis auf die fehlende Verkapselung dieselben Materialien mit denselben Größenbereichen und Eigenschaften wie für die zweiten Effektpigmente in Betracht, so dass die diesbezüglichen obigen Ausführungen auch für die dritten Effektpigmente gelten.

Die verkapselten zweiten Effektpigmente und die unverkapselten dritten Effektpigmente können zumindest teilweise in denselben Bereichen der optisch variablen Farbschicht und/ oder zumindest teilweise in voneinander getrennten Bereichen der optisch variablen Farbschicht vorliegen. In beiden Varianten lassen sich auffällige visuelle Effekte mit hohem Wiedererkennungswert erzeugen, wie weiter unten genauer erläutert.

In einer bevorzugten Ausgestaltung der Erfindung enthält die optisch variable Farbschicht ein Pigmentgemisch mit den ersten Effektpigmenten, den verkapselten zweiten Effektpigmenten und gegebenenfalls den unverkapselten dritten Effektpigmenten. Alternativ kann die optisch variable Farbschicht aus mehreren übereinander angeordneten Teilschichten bestehen, die jeweils nur eine Effektpigmentsorte enthalten.

Die optisch variable Farbschicht ist vorzugsweise durch eine Siebdruckschicht oder Flexodruckschicht, in manchen Ausgestaltungen auch durch eine Stichtiefdruckschicht gebildet. Sie kann in allen genannten Ausgestaltungen zusätzlich blindverprägt sein, insbesondere zur Verstärkung des 3D-Effekts der magnetisch ausgerichteten Effektpigmente.

Zur dauerhaften Fixierung des magnetisch ausgerichteten Motivs der dritten Effektpigmente ist die Farbschicht vorzugsweise auf Basis eines UV-härtenden Farbsystems gebildet, wobei reine UV-Systeme, UV/wasserbasierte Systeme oder auch UV/lösemittelbasiertes Systeme in Betracht kommen. Neben den ersten, zweiten und gegebenenfalls dritten Effektpigmenten kann die Farbschicht auch weitere Pigmente, insbesondere isotrope Pigmente und/ oder weichmagnetische Pigmente enthalten. Selbstverständlich können die weiteren Pigmente bzw. allgemein weitere Zusatzstoffe visuell und/ oder maschinell erfassbare Eigenschaften aufweisen, die die beschriebenen visuellen Effekte des erfindungsgemäßen Sicherheitselements nicht oder nur unwesentlich beeinträchtigen.

In einer vorteilhaften Ausgestaltung ist die optisch variable Farbschicht auf einem Standardbanknotenpapier oder auf einer farbigen Untergrundschicht aufgebracht. Als Substratmaterial für das Banknotenpapier kommt jede Art von Papier in Betracht, insbesondere Baumwoll-Velinpapier. Selbstverständlich kann auch Papier eingesetzt werden, dass einen Anteil x an polymeren Material enthält, wobei x zwischen 0 und 100 Gew.-% liegen kann.

Das Substratmaterial der Banknote bzw. allgemein eines Datenträgers kann auch eine Kunststofffolie, wie etwa eine Polyesterfolie sein. Die Folie kann monoaxial oder biaxial gereckt sein. Eine Reckung der Folie führt unter anderem dazu, dass sie lichtpolarisierende Eigenschaften erhält, die als weiteres Sicherheitsmerkmal genutzt werden können. Das Substratmaterial kann auch ein mehrschichtiger Verbund sein, der wenigstens eine Schicht aus Papier oder einem papierähnlichen Material enthält. Ein solcher Verbund, der auch als Substratmaterial für Banknoten eingesetzt werden kann, zeichnet sich durch eine außerordentlich große Stabilität aus, die für die Haltbarkeit der Note bzw. des Datenträgers von großem Vorteil ist.

Als Substratmaterial kann ferner ein mehrschichtiges, papierfreies Kompositmaterial eingesetzt werden, das insbesondere in manchen Klimaregionen der Erde mit Vorteil eingesetzt werden kann.

Alle Substratmaterialien können Zusatzstoffe enthalten, die als Echtheitsmerkmale dienen können. Dabei kommen insbesondere Lumineszenzstoffe infrage, die im sichtbaren Wellenlängenbereich vorzugsweise transparent sind und in einem nicht sichtbaren Wellenlängenbereich durch geeignete Hilfsmittel, wie etwa eine UV- oder IR-Strahlung emittierende Quelle, angeregt werden können, um eine direkt sichtbare oder mit Hilfsmitteln nachweisbare Lumineszenzstrahlung zu erzeugen.

Untergrundschichten mit dunklen Farben führen in der Regel zu einer besonders hohen Brillanz der optisch variablen Effekte. Als Substrat kommt jedoch auch eine transparente oder transluzente Folie infrage. In diesem Fall kann das Sicherheitselement mit Vorteil in oder über einem Fensterbereich oder einer durchgehenden Öffnung eines Wertdokuments als Durchsichtssicherheitselement verwendet werden. Die Folie kann als ein eine Teilfläche des Substrats bedeckendes Patch oder als ein sich über die gesamte Länge oder Breite des Datenträgers erstreckender Streifen ausgebildet sein. Als Materialien für die Folie kommen in erster Linie die Kunststoffe PET (Polyethylenterephthalat), PBT (Polybutylenterephthalat), PEN (Polyethylennaphthalat), PP (Polypropylen), PA (Polyamid) und PE (Polyethylen) in Betracht. Die Folie kann ferner monoaxial oder biaxial gereckt sein, wie oben bereits erläutert.

Eine Öffnung in einer Banknote kann bereits bei der Herstellung des für die Banknote verwendeten Sicherheitspapiers erzeugt werden und weist dann einen faserigen, unregelmäßigen Rand auf. Ein solcher Rand ist charakteristisch für bereits bei der Blattbildung hergestellte Öffnungen und kann nicht nachträglich erzeugt werden. Einzelheiten zur Herstellung derartiger unregelmäßiger Ränder können der Druckschrift WO 03/054297 A2 entnommen werden, deren Offenbarungsgehalt insoweit in die vorliegende Anmeldung aufgenommen wird. In anderen Ausgestaltungen wird die Öffnung erst nach der Papierherstellung durch Stanzen oder Schneiden, beispielsweise durch Laserstrahlschneiden erzeugt.

Die optisch variable Farbschicht kann in einer Weiterbildung der Erfindung auf einer informationsführenden Untergrundschicht, insbesondere einer Siebdruck-, Flexodruck- oder einer Stichtiefdruckschicht aufgebracht sein. Da die Information in den transluzenten Bereichen der Farbschicht erkennbar, in den opaken Bereichen dagegen verdeckt ist, können Farbschicht und Untergrundschicht zur Erzeugung eines weiteren Echtheitsmerkmals zusammenwirken, wie weiter unten genauer erläutert.

Die Untergrundschicht kann mit Vorteil auch thermochrome Eigenschaften aufweisen, um ein auf eine weitere Art interaktiv beeinflussbares Sicherheitselement zu schaffen. Eine solche thermochrome Untergrundschicht kann insbesondere so ausgelegt sein, dass bei ihrer Aktivierung durch Temperaturerhöhung der optisch variable Effekt der ersten Effektpigmente für den Betrachter verschwindet.

Gemäß einer Weiterbildung der Erfindung ist die optisch variable Farbschicht mit einer magnetischen Untergrundschicht kombiniert, die vollflächig oder in Form von Mustern, Zeichen oder einer Codierung vorliegen kann. Durch eine derartige magnetische Untergrundschicht kann erreicht werden, dass die optisch variable Farbschicht bereits ohne äußeres Magnetfeld ein gewünschtes Motiv anzeigt, oder dass ein zunächst verborgenes Motiv durch ein äußeres Magnetfeld freigelegt wird.

Bei einer ersten Variante enthält die magnetische Untergrundschicht eine weichmagnetische Substanz niedriger bis vernachlässigbarer Remanenz, die in Form eines Motivs, beispielsweise in Form von Mustern, Zeichen oder einer Codierung angeordnet ist. Aufgrund ihrer niedrigen Remanenz ist die weichmagnetische Substanz selbst nicht dauerhaft magnetisierbar, behält also nach Wegfall eines äußeren Magnetfelds keine Magnetisierung zurück.

Wird das Sicherheitselement einem externen Magnetfeld ausgesetzt, so schirmt die magnetische Untergrundschicht das Magnetfeld in den Bereichen, in denen die weichmagnetische Substanz vorliegt, weitgehend ab, so dass die zweiten Effektpigmente dort nicht oder nur wenig beeinflusst werden. Durch die entstehende, lokal unterschiedliche Ausrichtung der zweiten Effektpigmente legt das äußere Magnetfeld das in der magnetischen Untergrundschicht vorliegende Motiv frei und macht es für den Betrachter erkennbar. Durch die magnetische Untergrundschicht wird somit ein reversibel anzeigbares, magnetisches Motiv erzeugt, ohne dass das äußere Magnetfeld die Motivform aufweisen muss. Die Verifikation kann vielmehr mit gewöhnlichen, weit verbreiteten Magneten, wie etwa mit den Permanentmagneten eines Mobiltelefons, eines tragbaren Audioabspielgerätes oder eines Warensicherungssystems erfolgen.

Pigmente mit den gewünschten weichmagnetischen Eigenschaften sind beispielsweise Weichferrite, wie etwa ZnMn-Ferrit, oder verschiedene amorphe, kristalline oder nanokristalline Metalle oder Metalllegierungen, die dem Fachmann für die Abschirmung statischer oder niederfrequenter Magnetfelder bekannt sind. Die Pigmente werden dabei vorzugsweise in Form einer magnetischen Druckfarbe aufgedruckt. Die Ausprägung des Effekts kann insbesondere über die Pigmentierung der Druckfarbe und die Dicke der aufgedruckten Schicht eingestellt werden.

Bei einer zweiten Variante enthält die magnetische Untergrundschicht eine magnetische Substanz mit mittlerer bis hoher Koerzitivfeldstärke, die vollflächig oder in Form eines Motivs vorliegen kann. Die Koerzitivfeldstärke liegt dabei typischerweise zwischen 50 kA/m und 300 kA/m. Eine derartige magnetische Substanz kann noch relativ leicht durch ein äußeres Magnetfeld magnetisiert bzw. ummagnetisiert werden. Die initiale Magnetisierung in Form eines gewünschten Motivs kann beispielsweise mit einem starken Permanentmagneten erzeugt werden. Aufgrund der Remanenz des magnetischen Materials bleibt auch nach Wegfall des äußeren Magnetfelds eine Magnetisierung zurück, die stark genug ist, die reversibel ausrichtbaren zweiten Effektpigmente in ihrer Position zu halten.

Geeignete Materialien für diese Variante sind beispielsweise Mischungen aus Hart- und Weich-Ferriten oder Sintermaterialien und Legierungen, wie AlNiCo, CuNiFe oder Chrom-Cobalt-Stähle.

Nach einer dritten Variante dieses Erfindungsaspekts wird die Koerzitivfeldstärke der magnetischen Substanz so groß gewählt, dass sie sich durch Standard-Permanentmagneten nicht mehr ummagnetisieren lässt, sondern dass dazu sehr starke Felder benötigt werden, wie sie beispielsweise mit starken Elektromagneten oder durch Stoßmagnetisierung erzeugt werden können. Die Koerzitivfeldstärke der magnetischen Substanz liegt dabei oberhalb von 300 kA/m.

In dieser Variante kann beispielsweise bei der Herstellung des Sicherheitselements oder in einem nachfolgenden Individualisierungsschritt ein Motiv in die magnetische Untergrundschicht einmagnetisiert werden, das durch die einem Benutzer üblicherweise zur Verfügung stehenden Mittel nicht gelöscht werden kann. Durch die Ausrichtung der zweiten Effektpigmente entsteht ein sichtbares, permanentes magnetisches Muster, das durch ein äußeres Magnetfeld verstärkt oder abgeschwächt werden kann.

Geeignete Materialien für diese Variante sind beispielsweise anisotrope und insbesondere isotrope Magnetpulver auf Hartferrritbasis, wie etwa Barium- oder Strontiumferrit, oder Magnetpulver auf Basis von Sintermaterialien und Legierungen wie, NdFeB oder SmCo. Auch HiCo (High Coercitivity) Materialien aus dem Magnetkartenbereich kommen in Betracht, da diese eine Koerzitivfeldstärke bis zu 4000 Oe (etwa 320 kA/m) aufweisen.

Die Applikation einer magnetischen Untergrundschicht auf ein Papiersubstrat kann direkt durch Verdrucken einer Farbe erfolgen, die die in der ersten bis dritten Variante genannten magnetischen Substanzen in möglichst hoher Pigmentierung im Bereich von etwa 15 % bis 50 % enthält. Um möglichst hohe Schichtdicken und damit einen intensiven Effekt zu erreichen, wird die Farbe bevorzugt im Sieb- oder Stichtiefdruck aufgebracht.

Die Applikation der magnetischen Untergrundschicht auf ein Foliensubstrat eröffnet weitere Möglichkeiten. So können auf eine Folie mit bekannten Verfahren eine oder mehrere Schichten aus magnetischen Materialien aufgebracht werden. Beispielsweise kann die Folie mit einer magnetischen Metallschicht, etwa aus Eisen oder Nickel, bedampft, in Form eines gewünschten Motivs demetallisiert und mit einer optisch variablen Farbschicht der beschriebenen Art über- oder unterdruckt werden. Durch Vakuumverfahren können auch verschiedene nichtmetallische Schichten oder metallische Legierungen auf eine Folie aufgebracht werden, die die gewünschten magnetischen Eigenschaften in Bezug auf Koerzitivfeldstärke, Remanenz und dergleichen aufweisen.

Die Erfindung umfasst auch ein Verfahren zum Herstellen eines optisch variablen Sicherheitselements zur Absicherung von Wertgegenständen, bei dem auf ein Substrat eine optisch variable Farbschicht aufgebracht wird, die erste, optisch variable Effektpigmente zur Erzeugung eines betrachtungswinkelabhängigen visuellen Eindrucks enthält, und die zweite, durch ein äußeres Magnetfeld reversibel ausrichtbare Effektpigmente enthält, wobei der Grad der Ausprägung des betrachtungswinkelabhängigen visuellen Eindrucks der optisch variablen Effektpigmente von der Orientierung der magnetisch ausrichtbaren Effektpigmente relativ zur Ebene der Farbschicht abhängt. Die zweiten Effektpigmente werden dabei vorzugsweise verkapselt, so dass sie in ihrer Verkapselung im Wesentlichen frei drehbar sind.

In einer vorteilhaften Weiterbildung des Verfahrens wird eine optisch variable Farbschicht aufgebracht, die neben den ersten und zweiten Effektpigmenten weiter dritte, unverkapselte und magnetisch ausrichtbare Effektpigmente enthält, wobei die dritten Effektpigmente durch ein externes Magnetfeld dauerhaft ausgerichtet werden, um ein Motiv in Form von Mustern, Linien, Zeichen oder einer Codierung zu bilden.

Mit Vorteil werden die ersten, zweiten und gegebenenfalls dritten Effektpigmente zu einem Pigmentgemisch gemischt und gemeinsam verdruckt, vorzugsweise im Siebdruck-, Flexodruck- oder im Stichtiefdruck-Verfahren. Alternativ kann auf das Substrat zunächst eine reine Magnetschicht mit den zweiten Effektpigmenten aufgedruckt werden, und über die reine Magnetschicht eine reine Farbschicht mit den ersten Effektpigmenten gedruckt werden. Gegebenenfalls kann eine weitere Schicht mit den dritten Effektpigmenten vorgesehen sein.

Das durch die magnetische Ausrichtung erzeugte Motiv der dritten Effektpigmente wird mit Vorteil durch UV-Härten dauerhaft fixiert.

Die Erfindung enthält ferner eine Sicherheitsanordnung zur Absicherung von Sicherheitspapieren, Wertdokumenten und dergleichen mit einem Sicherheitselement der beschriebenen Art und mit einem Verifikationselement mit einem magnetischen Motivbereich, in dem magnetisches Material in Form von Mustern, Linien, Zeichen oder einer Codierung vorliegt. Mit besonderem Vorteil ist der magnetische Motivbereich dabei im Wesentlichen senkrecht zur Ebene des Verifikationselements magnetisiert. Das von dem magnetischen Motivbereich dargestellte Motiv kann offen sichtbar sein oder auch ohne Hilfsmittel nicht erkennbar sein, beispielsweise durch Überdeckung mit einer dunklen Druckschicht.

Neben der Verwendung von Motivmagneten zur Verifikation der erfindungsgemäßen Sicherheitselemente kommt auch die Nutzung anderer Magnete zur Verifikation infrage. Beispielsweise enthalten moderne Mobiltelefone nahezu alle starke Permanentmagneten in den Lautsprechern. Auch tragbare Audioabspielgeräte bzw. deren Kopf- oder Ohrhörer sowie Warensicherungssysteme am Point of Sale enthalten oft Permanentmagneten ausreichender Stärke. Aufgrund ihrer weiten Verbreitung stehen diese Magnete dem Benutzer fast überall zur Verfügung und können, insbesondere bei Sicherheitselementen, die eine oben beschriebene magnetische Untergrundschicht enthalten, mit Vorteil ebenfalls zur Verifikation erfindungsgemäßer Sicherheitselemente herangezogen werden.

Die Erfindung umfasst weiter einen Datenträger, insbesondere ein Wertdokument, wie eine Banknote, einen Pass, eine Urkunde, eine Ausweiskarte oder dergleichen, der mit einem Sicherheitselement der beschriebenen Art oder mit einer Sicherheitsanordnung der beschriebenen Art ausgestattet ist. Das Sicherheitselement kann, insbesondere wenn es auf einem transparenten oder transluzenten Substrat vorliegt, auch in oder über einem Fensterbereich oder einer durchgehenden Öffnung des Datenträgers angeordnet sein.

Enthält der Datenträger sowohl ein erfindungsgemäßes Sicherheitselement als auch ein zugehöriges Verifikationselement, so sind diese mit Vorteil geometrisch so auf dem Datenträger angeordnet, dass das Sicherheitselement durch Biegen oder Falten des Datenträgers über das Verifikationselement bringbar ist.

Gegenstand der Erfindung ist weiter eine Verifikationseinrichtung zur Echtheitsprüfung eines Sicherheitselements der beschriebenen Art mit einem magnetischen Motivbereich, in dem magnetisches Material in Form von Mustern, Linien, Zeichen oder einer Codierung vorliegt, und der im Wesentlichen senkrecht zur Ebene des Motivbereichs magnetisiert ist, um die zweiten Effektpigmente des optisch variablen Farbschicht des Sicherheitselements magnetisch auszurichten.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement,
- Fig. 2: das Sicherheitselement der Fig. 1 zusammen mit einer Verifikationseinrichtung, wobei in (a) Sicherheitselement und Verifikationseinrichtung räumlich getrennt sind, und in (b) das Sicherheitselement auf der Verifikationseinrichtung aufliegt,
- Fig. 3: einen Querschnitt durch ein Sicherheitselement nach einem Ausführungsbeispiel der Erfindung, in der linken Bildhälfte ohne und in der rechten Bildhälfte mit Verifikationseinrichtung,
- Fig. 4: ein Sicherheitselement nach einem anderen Ausführungsbeispiel der Erfindung in einer Querschnittsdarstellung wie in Fig. 3,
- Fig. 5: ein Sicherheitselement nach einem weiteren Ausführungsbeispiel der Erfindung im Querschnitt,
- Fig. 6: Aufsichten auf einen Ausschnitt des Sicherheitselements der Fig. 5, in (a) ohne Verifikationseinrichtung und in (b) mit Verifikationseinrichtung,
- Fig. 7: ein Sicherheitselement nach noch einem weiteren Ausführungsbeispiel der Erfindung im Querschnitt,
- Fig. 8: eine Banknote mit einer erfindungsgemäßen Sicherheitsanordnung aus einem Sicherheitselement und einem spiegelbildlich zur Mittellinie angeordneten Verifikationselement,
- Fig. 9: ein Sicherheitselement nach einem weiteren Ausführungsbeispiel der Erfindung in einer Querschnittsdarstellung wie in Fig. 3,
- Fig. 10: ein erfindungsgemäßes Sicherheitselement mit einer weichmagnetischen Untergrundschicht bei der Verifizierung mit einem externen Magneten, und
- Fig. 11: ein erfindungsgemäßes Sicherheitselement mit einer magnetischen Untergrundschicht mit einer magnetischen Substanz mit mittlerer bis hoher Koerzitivfeldstärke.

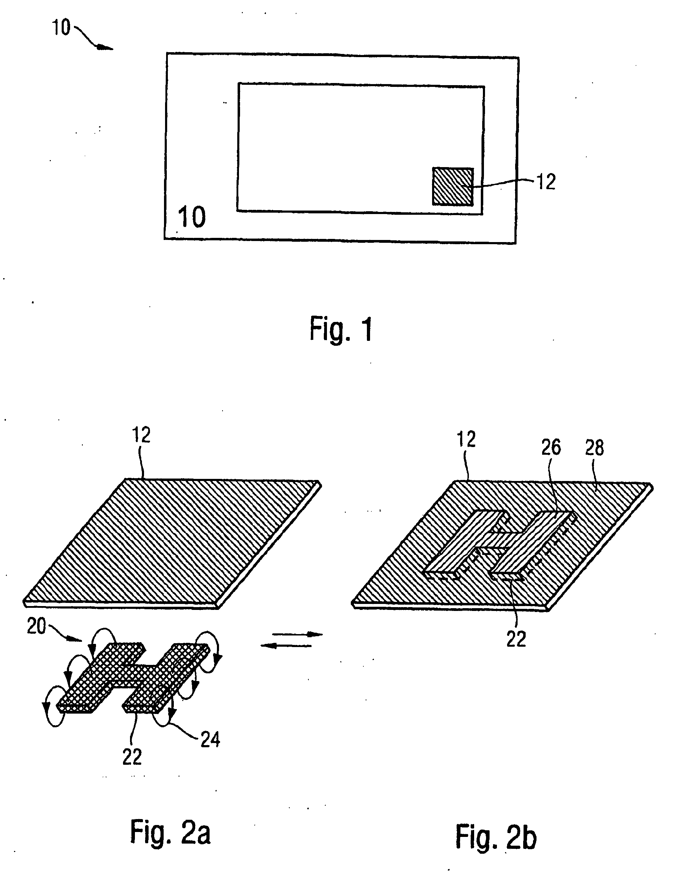

Die Erfindung wird nun am Beispiel einer Banknote erläutert. Fig.1 zeigt dazu eine schematische Darstellung einer Banknote 10 mit einem direkt auf das Banknotenpapier aufgedruckten, optisch variablen Sicherheitselement 12. Es versteht sich, dass die Erfindung nicht auf aufgedruckte Sicherheitselemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben aufgedruckten Elementen beispielsweise auch Transferelemente, Sicherheitsfäden oder Sicherheitsstreifen und neben Aufsichtselementen auch Durchsichtselemente infrage.

In Fig. 2 ist das optisch variable Sicherheitselement 12 zusammen mit einer externen Verifikationseinrichtung 20 dargestellt, wobei das Sicherheitselement 12 und die Verifikationseinrichtung 20 in Fig. 2(a) räumlich deutlich voneinander getrennt sind, während das Sicherheitselement 12 in der Darstellung der Fig. 2(b) auf der Verifikationseinrichtung 20 aufliegt.

Wie in Fig. 2(a) dargestellt, zeigt das optisch variable Sicherheitselement 12 ohne Verifikationseinrichtung 20 bzw. mit einem ausreichenden räumlichen Abstand von der Verifikationseinrichtung 20 einen metallischen Glanz, der mit einem schwach ausgeprägten, einheitlichen Farbkippeffekt kombiniert ist. Bei dem Farbkippeffekt ändert sich der Farbeindruck des Sicherheitselements für den Betrachter beim Kippen des Sicherheitselements beispielsweise von Grün bei senkrechter Aufsicht zu Blau bei schräger Betrachtung. Denkbar sind allerdings auch andere Farbwechsel, wie etwa von kupferfarben zu Grün oder von goldfarben zu Grün.

Die Verifikationseinrichtung 20 für das Sicherheitselement 12 weist einen Motivmagneten 22 auf, dessen Magnetisierung durch die eingezeichneten Magnetfeldlinien 24 angedeutet ist. Das magnetische Material des Motivmagneten 22 ist in Form von Mustern, Linien, Zeichen oder einer Codierung angeordnet und bildet im Ausführungsbeispiel den Buchstaben "H". Der magnetische Nordpol stellt dabei die Oberseite des Magneten und der magnetische Südpol die Unterseite des Magneten dar, so dass die Magnetisierung des Motivmagneten im Wesentlichen senkrecht auf der Ebene des magnetischen Materials steht. Es versteht sich, dass der Motivmagnet der Verifikationseinrichtung 20 im allgemeinen Fall beliebige Muster, Zeichen oder Codierungen darstellen kann und dass seine Magnetisierung auch umgekehrt oder durch eine komplexere Abfolge von magnetischen Nord- und Südpolen gebildet sein kann. Für eine hohe Magnetisierung kommen für das magnetische Material des Motivmagneten neben herkömmlichen Magnetmaterialien insbesondere auch magnetische Selten-Erd-Legierungen, wie Samarium-Cobalt- oder Neodym-Eisen-Bor-Legierungen, in Betracht. Die Erfindung enthält auch Gestaltungen, die ohne spezielle Motivmagneten verifiziert werden können, wie weiter unter genauer geschildert.

Wird das Sicherheitselement 12 durch den Benutzer unmittelbar über die Verifikationseinrichtung 20 gebracht, wie in Fig. 2(b) gezeigt, so verändert er dadurch interaktiv das visuelle Erscheinungsbild des Sicherheitselements 12 im Bereich 26 über dem Motivmagneten 22. Der metallische Glanz des Bereichs 26 wird deutlich reduziert und es wird eine dunkle Untergrundschicht sichtbar. Gleichzeitig gewinnt der Farbkippeffekt im Bereich 26 wesentlich an Brillanz und Stärke.

Anstelle eines gleichmäßig dunklen Untergrunds kann im Bereich 26 auch eine Information, beispielsweise ein Schriftzug, eine Seriennummer, eine Denominationsangabe oder dergleichen sichtbar werden. Im Bereich 28 abseits des Motivmagneten 22 bleibt der visuelle Eindruck des Sicherheitselements 12 unverändert. Das von dem Motivmagneten 22 dargestellte Motiv spiegelt sich somit im Bereich 26 in charakteristischer Weise als bildmäßiger, brillanter Farbkippbereich vor einem metallischen Hintergrund wieder.

Werden das Sicherheitselement 12 und die Verifikationseinrichtung 20 wieder voneinander entfernt, stellt sich der in Fig. 2(a) gezeigte Zustand wieder ein, so dass der Betrachter dann wieder eine einheitlich metallisch glänzende Fläche mit schwach ausgeprägtem Farbkippeffekt sieht. Das Sicherheitselement 12 weist also ein reversibles und interaktiv auslösbares Echtheitskennzeichen auf.

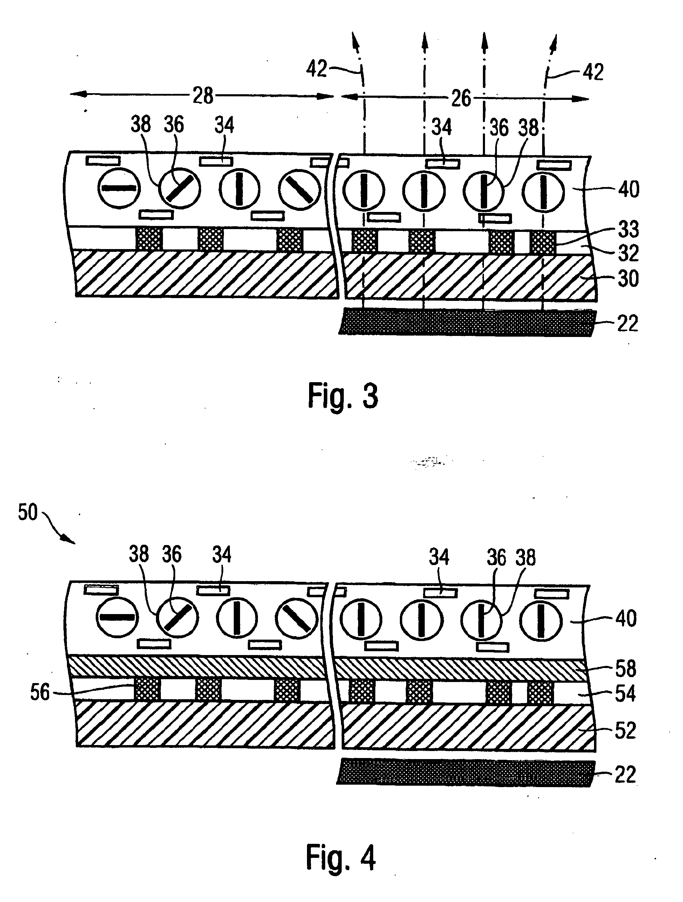

Der Aufbau des Sicherheitselements 12 und das Zustandekommen der reversiblen Änderung des visuellen Erscheinungsbilds werden nun mit Bezug auf die Querschnittsdarstellung der Fig. 3 genauer erläutert. Dabei zeigt die linke Bildhälfte der Figur das Sicherheitselement 12 ohne Verifikationseinrichtung 20 bzw. einen Bereich 28 abseits des Motivmagneten 22. Die rechte Bildhälfte zeigt einen Ausschnitt des Bereichs 26 des Sicherheitselements, der unmittelbar über dem Motivmagneten 22 angeordnet ist.

Auf das Banknotenpapier 30 der Banknote 10 ist im Bereich des Sicherheitselements 12 eine Druckschicht 32 aufgebracht, die eine beliebige Information, wie etwa ein Linienmuster 33, eine alphanumerische Zeichenfolge, ein Logo oder dergleichen, darstellen kann. Die Druckschicht 32 kann auch, wie in dem Ausführungsbeispiel der Fig. 2, eine vollflächig dunkle, beispielsweise schwarze Untergrundschicht bilden. Die Druckschicht 32 kann insbesondere mittels Siebdruck, Flexodruck oder Stichtiefdruck auf das Banknotenpapier 30 aufgebracht sein.

Über diese im Allgemeinen informationsführende Druckschicht 32 ist im vorliegenden Fall im Siebdruckverfahren unter Verwendung eines Pigmentgemisches aus ersten Effektpigmenten 34 und zweiten Effektpigmenten 36 eine optisch variable Farbschicht 40 mit Farbkippeffekt aufgedruckt.

Bei den ersten Effektpigmenten 34 handelt es sich um optisch variable Pigmente, beispielsweise um Interferenzschichtpigmente mit einem Dünnschichtaufbau aus einer Reflexionsschicht, einer Absorberschicht und einer zwischen Reflexionsschicht und Absorberschicht angeordneten dielektrischen Abstandsschicht. Auch auf der Basis von flüssigkristallinen Polymeren hergestellte Pigmente oder irisierende Perlglanzpigmente, wie sie etwa von der Firma Merck KGaA unter der Bezeichnung Iriodin(R) oder Colorcrypt vertrieben werden, kommen als erste Effektpigmente 34 in Betracht.

Neben diesen optisch variablen ersten Effektpigmenten 34 enthält das Pigmentgemisch als zweite Effektpigmente magnetisch ausrichtbare, plättchenförmige Eisenpigmente 36, die im Ausführungsbeispiel aus reduzierend behandeltem Carbonyleisenpulver hergestellt sind. Solche plättchenförmigen Eisenpigmente können mit einem hohen Verhältnis von Plättchendurchmesser zu Plättchendicke erzeugt werden, wobei der (größte) Plättchendurchmesser vorzugsweise zwischen 6 µm und 60 µm, insbesondere zwischen 10 µm und 20 µm, und die Plättchendicke insbesondere zwischen 40 nm und 250 nm liegt. Details der Herstellung und Eigenschaften solcher plättchenförmiger Eisenpigmente können der Druckschrift EP 1 251 152 B1 entnommen werden, deren Offenbarung insoweit in die vorliegende Beschreibung aufgenommen wird.

Als Besonderheit sind die zweiten Effektpigmente 36 verkapselt und in ihrer Verkapselung 38 im Wesentlichen frei drehbar. Ohne äußeres Magnetfeld weisen die zweiten Effektpigmente 36 innerhalb ihrer Verkapselung 38 idealerweise keine Vorzugsorientierung auf, so dass die Gesamtheit der zweiten Effektpigmente eine im Wesentlichen isotrope Orientierung zeigt. Es versteht sich, dass sich in der Praxis, abhängig beispielsweise von der geometrischen Form, der Magnetisierbarkeit, der Viskosität der Verkapselungsflüssigkeit bzw. der Struktur der Verkapselung, gewisse Abweichungen von einer idealen isotropen Ausrichtung auftreten können.

Diese im Wesentlichen isotrope Ausrichtung der zweiten Effektpigmente 36 entspricht der in der linken Bildhälfte der Fig. 3 gezeigten Situation, wobei dort zur Illustration nur vier allgemeine, unterschiedliche Ausrichtungen der Pigmente 36 dargestellt sind.

Wird nun das Sicherheitselement 12 über den Motivmagneten 22 der Verifikationseinrichtung 20 gebracht, so werden die magnetisch ausrichtbaren zweiten Effektpigmente 36 durch dessen Magnetfeld ausgerichtet. Die Eisenpigmente 36 orientieren sich dabei mit ihrer Plättchenausdehnung entlang der Magnetfeldlinien 42. Aufgrund der in Fig. 2 angegebenen Form und Magnetisierung des Motivmagneten 22 treten die Magnetfeldlinien 42 im Bereich 26 im Wesentlichen senkrecht durch die Farbschicht 40 hindurch und richten die in ihrer Verkapselung frei drehbaren Eisenpigmente 36 ebenfalls im Wesentlichen senkrecht zur Ebene der Farbschicht 40 aus, wie im rechten Bildteil der Fig. 3 gezeigt.

Wegen ihrer plättchenförmigen Gestalt wirken die Eisenpigmente 36 für den Betrachter wie die Lamellen einer Jalousie, die den Blick auf die darunterliegenden Schichten freigeben oder ganz oder teilweise blockieren kann. In den Bereichen 28, in denen die Eisenpigmente 36 im Wesentlichen isotrop angeordnet sind (linke Bildhälfte der Fig. 3), schränken sie die Sicht auf die darunterliegende Druckschicht 32 so stark ein, dass die Farbschicht 40 in diesem Bereich opak erscheint und der metallischen Glanz der Eisenpigmente 36 den visuellen Eindruck des Sicherheitselements dominiert. Durch die Überlagerung mit dem metallischen Glanz der zweiten Effektpigmente 36 tritt der Farbkippeffekt der ersten Effektpigmente 34 visuell in den Hintergrund und erscheint daher nur schwach ausgeprägt. Es versteht sich, dass in der Praxis die deckenden Wirkung der isotrop orientierten Eisenpigmente 36 durch die Vielzahl der vorhandenen Pigmente erzeugt wird, die die wenigen Pigmente 36 der schematischen Darstellung der Fig. 3 um ein Vielfaches übersteigt.

Im Bereich 26, in dem die Eisenpigmente 36 durch den Motivmagneten 22 im Wesentlichen senkrecht zur Ebene der Farbschicht 40 ausgerichtet sind, geben sie wie die parallel gestellten Lamellen einer Jalousie den Blick auf die darunterliegende Druckschicht 32 und eine dort gegebenenfalls vorhandene Information 33 frei.

Der Farbkippeffekt der vom externen Magnetfeld nicht beeinflussten ersten Effektpigmente 34 ist grundsätzlich in beiden Teilbereichen 26 und 28 vorhanden. Aufgrund der Überlagerung mit dem metallischen Glanz der isotrop orientierten zweiten Effektpigmente 36 ist er allerdings im Teilbereich 28 in der Regel deutlich schwächer ausgeprägt als im Teilbereich 26. Die Brillanz des Farbkippeffekts im Teilbereich 26 hängt auch von der Gestaltung der Untergrundschicht 32 ab, wobei bei der Verwendung dunkler Farben eine besonders hohe Brillanz erreicht wird.

Aufgrund des relativ hohen Verhältnisses von Plättchendurchmesser zu Plättchendicke lässt sich ein hoher Kontrast zwischen deckenden Teilbereichen 28 und transluzenten Teilbereichen 26 erzeugen. Darüber hinaus erscheint das durch die Plättchenausrichtung in den Teilbereichen 26, 28 erzeugte Motiv für das menschliche Auge mit einem effektvollen, dreidimensional anmutenden Erscheinungsbild, das im Rahmen dieser Beschreibung auch als 3D-Effekt oder 3D-Eindruck des Motivs bezeichnet wird.

Wird die Verifikationseinrichtung 20 wieder von dem Sicherheitselement 12 entfernt, so relaxieren die magnetisch ausgerichteten Eisenpigmente 36 aufgrund ihrer freien Beweglichkeit innerhalb der Verkapselung 38 nach einiger Zeit wieder in den im Wesentlichen isotropen Ausgangszustand der linken Bildhälfte der Fig. 3. Die Änderung des visuellen Erscheinungsbilds des Sicherheitselements 12 kann so interaktiv ausgelöst und reversibel wieder zurückgenommen werden. Ohne Rückstellkraft kann die Rückkehr in den isotropen Ausgangszustand allerdings einige Minuten, Stunden oder sogar Tage in Anspruch nehmen. Falls eine raschere Rückkehr gewünscht ist, kann, wie weiter oben beschrieben, beispielsweise ein Gel innerhalb der Verkapselung 38 vorgesehen sein, das eine Rückstellkraft für die magnetisch ausrichtbaren Eisenpigmente 36 bereitstellt.

Für die Erzeugung der Farbschicht 40 wurden die zweiten Effektpigmente 36 zunächst verkapselt 38, die verkapselten Effektpigmente 36, 38 dann mit den ersten Effektpigmenten 34 gemischt und gemeinsam im Siebdruck verdruckt. Die Verkapselung der zweiten Effektpigmente kann beispielsweise dadurch erfolgen, dass Eisenpigmente geeigneter Größe ausgewählt werden, in einem wasserunlöslichen Lösemittel dispergiert werden, geeignete mizellare Vorstufen mit kontrollierter Teilchengröße in Wasser dargestellt werden, und diese mit acrylierter Gelatine durch Koazervation verkapselt werden. Auch andere Kapselmaterialien, wie vorher beschrieben, sind denkbar.

Das weitere Ausführungsbeispiel der Fig. 4 zeigt ein Sicherheitselement 50, das eine zusätzliche interaktive Beeinflussung des visuellen Erscheinungsbilds beispielsweise durch Berührung erlaubt. Dazu ist ein Substrat 52 mit einem Aufdruck 54, insbesondere einem Offsetaufdruck in Form von Mustern, Linien, Zeichen oder einer Codierung 56, versehen. Auf dem Aufdruck 54 ist im Siebdruck, Flexodruck oder Stichtiefdruck eine thermochrome Untergrundschicht 58 aufgebracht und auf der thermochromen Schicht 58 ist eine optisch variable Farbschicht 40 mit ersten 34 und zweiten Effektpigmenten 36 aufgedruckt, wie in Zusammenhang mit Fig. 3 beschrieben.

Die thermochrome Schicht 58 ist dabei so ausgelegt, dass der Farbkippeffekt der Farbschicht 40 bei der Aktivierung der thermochromen Schicht 58 für den Betrachter verschwindet, und nur noch die Grobstruktur der Eisenpigmente 36 sichtbar ist. Wechselt die thermochrome Schicht 58 beispielsweise bei Aktivierung durch Temperaturerhöhung ihre Farbe von Schwarz (bzw. allgemein einem dunklen Erscheinungsbild) auf Weiß (bzw. allgemein einem hellen Erscheinungsbild), so wird die Brillanz des Farbkippeffekts bei der Aktivierung deutlich reduziert, bis hin zu einem Grad, bei dem der optisch variable Effekt der ersten Effektpigmente 34 für den Betrachter völlig verschwindet. Gleichzeitig ist durch die dann sehr helle Schicht 58 der Aufdruck 54, 56 für den Betrachter zu erkennen.

Bei Abkühlung wechselt die Farbe der thermochrome Schicht 58 wieder zurück zu Schwarz bzw. zu dem ursprünglichen dunklen Erscheinungsbild, der Farbkippeffekt der Farbschicht 40 tritt dann wieder deutlich in Erscheinung und die dunkle Schicht 58 verdeckt erneut den unter ihr angeordneten Aufdruck 54, 56.

Auf diese Weise kann eine mithilfe der Verifikationseinrichtung 20 sichtbar gemachte 3D-Information durch Temperaturerhöhung interaktiv gelöscht bzw. auf eine zweidimensionale Information reduziert werden. Die thermochrome Schicht 58 wirkt dabei als interaktiver Schalter, mit dem der Blick auf den Aufdruck 54 bzw. die Information 56 für den Betrachter freigegeben werden kann. Die thermochrome Schicht 58 kann vollflächig ausgebildet oder mit einer Information, beispielsweise in Form von Mustern, Linien, Zeichen oder einer Codierung, versehen sein. Sie kann auch eine Mischung unterschiedlicher thermochromer Farben mit unterschiedlichen Aktivierungstemperaturen aufweisen, so dass bei Temperaturerhöhung eine Kaskade sich verändernder optisch variabler Effekte entsteht.

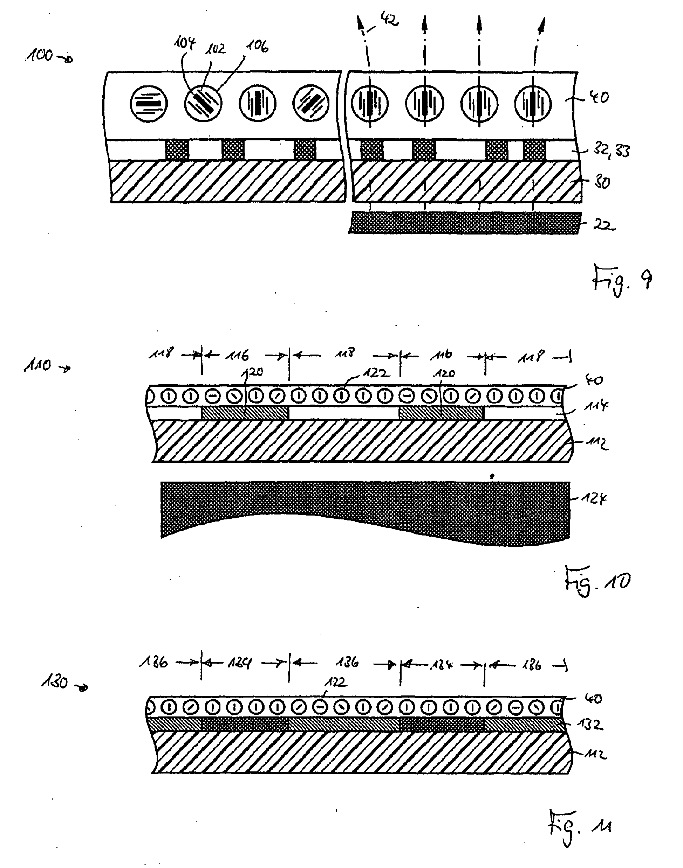

Während bei den Ausführungsbeispielen der Figuren 3 und 4 die ersten Effektpigmente 34 außerhalb der Verkapselung 38 der zweiten Effektpigmente 36 vorliegen, können die ersten Effektpigmente auch gemeinsam mit den zweiten Effektpigmenten in Mikrokapseln verkapselt sein, wie in Fig. 9 gezeigt.

Der Aufbau des Sicherheitselements 100 der Fig. 9 entspricht dabei weitgehend dem bei Fig. 3 bereits beschriebenen Aufbau. Im Unterschied dazu sind allerdings die auf Basis von flüssigkristallinen Polymeren hergestellten, plättchenförmigen ersten Effektpigmente 102 gemeinsam mit den plättchenförmigen Eisenpigmenten 104 in Mikrokapseln 106 verkapselt. In dieser Ausgestaltung ändert sich bei der Ausrichtung die Orientierung der ersten Effektpigmente 102 zusammen mit der Orientierung der zweiten Effektpigmente 104, so dass sich dynamische optische variable Effekt ergeben. Insbesondere ändert sich durch die gemeinsame Drehung auch hier der Grad der Ausprägung des betrachtungswinkelabhängigen visuellen Eindrucks der ersten Effektpigmente 102 mit der Orientierung der zweiten Effektpigmente 104 relativ zur Ebene der Farbschicht 40.

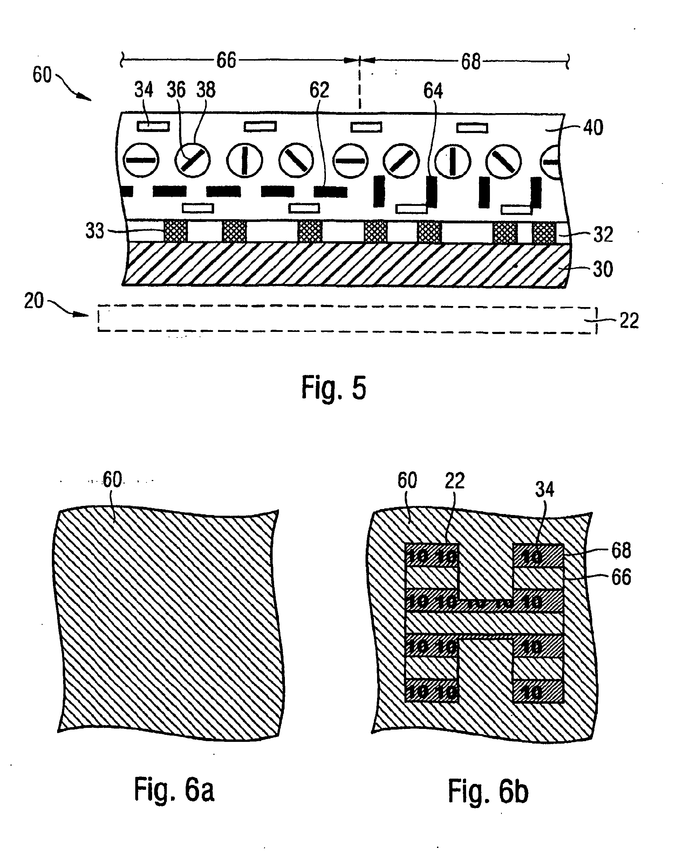

Bei dem weiteren Ausführungsbeispiel der Fig. 5 enthält das Sicherheitselement 60 eine optisch variable Farbschicht 40, die neben den bereits in Zusammenhang mit den Figuren 2 bis 4 beschriebenen ersten Effektpigmenten 34 und den verkapselten zweiten Effektpigmenten 36, 38 weiter dritte, unverkapselte, magnetisch ausrichtbare Effektpigmente 62, 64 enthält. Die dritten Effektpigmente sind magnetisch in Form eines vorgegeben Motivs ausgerichtet, wobei in dem in Fig. 5 gezeigten Ausführungsbeispiel zur Illustration ein einfaches Streifenmotiv aus alternierenden Streifen 66, 68 gezeigt ist.

Anders als die Ausrichtung der zweiten Effektpigmente, die vom Benutzer mithilfe einer geeigneten Verifikationseinrichtung interaktiv und reversibel verändert werden kann, ist die Ausrichtung der dritten Effektpigmente 62, 64 unveränderlich und dauerhaft fixiert. Als Materialien kommen für die dritten Effektpigmente wie für die zweiten Effektpigmente insbesondere magnetisch ausrichtbare, plättchenförmige Eisenpigmente 62, 64 infrage, die aus reduzierend behandeltem Carbonyleisenpulver hergestellt sein können und die vorzugsweise die bereits bei der Beschreibung der zweiten Effektpigmente angegebenen Größen und Eigenschaften aufweisen. Die in die Farbschicht eingebrachten zweiten und dritten Effektpigmente können auch bis auf die fehlende Verkapselung der dritten Effektpigmente identisch sein.

Für die Herstellung der Farbschicht 40 wurden die ersten Effektpigmente 34, die verkapselten zweiten Effektpigmente 36, 38 und die unverkapselten dritten Effektpigmente 62, 64 gemischt und gemeinsam im Siebdruck verdruckt. Dann wurde ein geeignetes externes Magnetfeld mit der Gestalt des gewünschten Motivs angelegt, um die dritten Effektpigmente magnetisch auszurichten. Wie oben bereits beschrieben, orientieren sich die magnetisch ausrichtbaren Eisenpigmente 36, 62, 64 im externen Feld mit ihrer Plättchenausdehnung entlang der Magnetfeldlinien, so dass die Eisenpigmente 64 in denjenigen Bereichen 68, in denen die Magnetfeldlinien beim Ausrichtungsschritt senkrecht zur Substratebene stehen, im Wesentlichen senkrecht zur Ebene der Farbschicht ausgerichtet werden, und sich in den Bereichen 66, in denen die Magnetfeldlinien parallel zur Substratebene verlaufen, entsprechend eine im Wesentlichen in der Ebene der Farbschicht liegende Orientierung der Eisenpigmente 62 ergibt, wie in Fig. 5 dargestellt.

Die Farbschicht 40 wird dann mit den noch magnetisch ausgerichteten Eisenpigmenten 36, 62, 64 getrocknet. Um das magnetisch erzeugte Motiv der dritten Effektpigmente 62, 64 dauerhaft zu fixieren, werden dabei insbesondere UV-härtende Farbsysteme eingesetzt, wobei reine UV-Systeme, UV/ wasserbasierte Systeme oder auch UV/lösemittelbasierte Systeme in Betracht kommen. Durch den Trocknungsschritt werden die ausgerichteten, unverkapselten dritten Effektpigmente 62, 64 in ihrer Orientierung dauerhaft fixiert, während die verkapselten zweiten Effektpigmente 36 aufgrund ihrer freien Drehbarkeit innerhalb der Verkapselung nach dem Entfernen des äußeren Magnetfelds wieder zu einer im Wesentlichen isotropen Ausrichtungsverteilung zurückkehren.

Bei der Betrachtung des Sicherheitselements 60 ohne Verifikationseinrichtung 20 wird dessen visueller Eindruck von den isotrop verteilten und damit deckend wirkenden zweiten Effektpigmenten 36 dominiert. Wie in der Aufsicht der Fig. 6(a) dargestellt, zeigt das Sicherheitselement 60 ohne Verifikationseinrichtung daher einen metallischen Glanz, der mit einem schwach ausgeprägten, einheitlichen Farbkippeffekt kombiniert ist.

Wird das Sicherheitselement 60 über die Verifikationseinrichtung 20 mit Motivmagnet 22 gebracht, so werden die beweglichen und magnetisch ausrichtbaren zweiten Effektpigmente 36 durch das Magnetfeld der Verifikationseinrichtung bereichsweise senkrecht zur Ebene der Farbschicht 40 ausgerichtet, wie in Zusammenhang mit Fig. 3 bereits beschrieben. Die dauerhaft fixierten dritten Effektpigmente 62, 64 und die nicht-magnetischen ersten Effektpigmente 34 werden durch das Magnetfeld der Verifikationseinrichtung 20 nicht beeinflusst.

In den Streifenbereichen 68 sind dann sowohl die zweiten Effektpigmente 36 als auch die dritten Effektpigmente 64 senkrecht zur Ebene der Farbschicht 40 orientiert, so dass dort der Blick auf die Druckschicht 32 freigegeben wird. Dagegen versperren in den Streifenbereichen 66 die parallel zur Ebene der Farbschicht ausgerichteten dritten Effektpigmente 62 den Durchblick, dort bleibt die Farbschicht 40 auch in Anwesenheit der Verifikationseinrichtung 20 opak.

Wie der Aufsicht der Fig. 6(b) dargestellt, bringt die Verifikationseinrichtung 20 somit innerhalb des Bereichs des Motivmagneten 22 zum einen das dauerhaft fixierte, magnetische Motiv 66, 68 zum Vorschein, das aufgrund seines Zustandekommens durch die unterschiedliche Ausrichtung plättchenförmiger Pigmente 62, 64 für den Betrachter einen ausgeprägten 3D-Effekt aufweist. In Fig. 5 sind der Einfachheit halber nur zwei Orientierungen der dritten Effektpigmente 62, 64 gezeigt, es versteht sich jedoch, dass sich durch entsprechende Orientierung der Magnetfeldlinien beim Ausrichtungsschritt beliebige Winkel zwischen den Eisenpigmentplättchen und der Ebene der Farbschicht einstellen und damit auch komplexe, magnetische Motive erzeugen lassen.

Enthält die Druckschicht 32 eine Information 33, im gezeigten Ausführungsbeispiel etwa die sich wiederholende Ziffernfolge "10", so wird diese Information 33 zum anderen in den über dem Motivmagneten 22 liegenden Teilbereichen der Streifen 68 sichtbar, während sie in den opak erscheinenden Streifen 66 stets verdeckt bleibt. Durch eine Bewegung des Motivmagneten 22 über oder unter dem Sicherheitselement 60 kann der Benutzter interaktiv und reversibel das zunächst verborgene 3D-Motiv 66, 68 und die Information 33 der Druckschicht 32 über dem gesamten Bereich des Sicherheitselements 60 sichtbar machen. Eine derartige interaktive Gestaltung hat für den Betrachter einen hohen Wiedererkennungswert und weist daher im Allgemeinen eine sehr hohe Fälschungssicherheit auf.

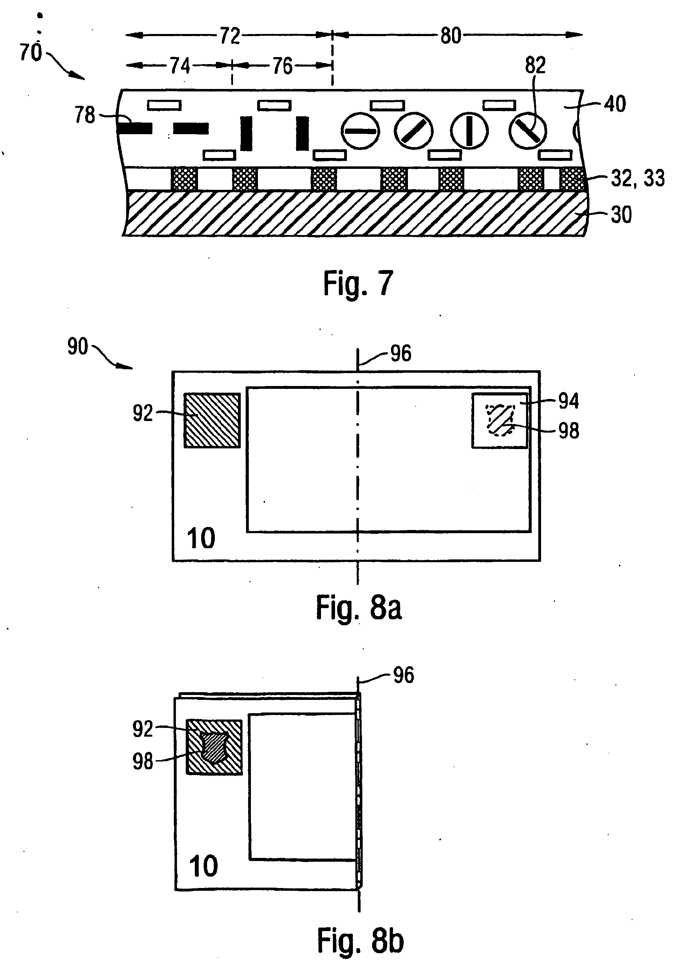

Die zweiten und dritten Effektpigmente können auch in getrennten Bereichen eines Sicherheitselements 70 vorliegen, wie in dem Ausführungsbeispiel der Fig. 7 gezeigt. Das Sicherheitselement 70 enthält in einem Teilbereich 72 ein dauerhaft fixiertes magnetisches Motiv 74, 76 mit 3D-Effekt, das, wie bereits bei Fig. 5 erläutert, durch die unterschiedliche magnetische Ausrichtung und nachfolgende Fixierung von unverkapselten Eisenpigmenten 78 erzeugt wird.

In einem weiteren Teilbereich 80 liegen die Eisenpigmente 82 in verkapselter Form und damit reversibel orientierbar vor. Im Teilbereich 80 kann dann das visuelle Erscheinungsbild des Sicherheitselements 70 mithilfe einer Verifikationseinrichtung 20 interaktiv verändert werden. Insbesondere kann für diesen Zweck eine Verifikationseinrichtung 20 mit einem Motivmagneten eingesetzt werden, dessen Motiv dem dauerhaft fixierten magnetischen Motiv 74, 76 entspricht. Bei der Echtheitsprüfung wird dann neben dem 3D-Motiv 74, 76 dasselbe Motiv im Bereich 80 interaktiv nochmals dargestellt, so dass ein selbsterklärendes Sicherheitselement mit hohem Aufmerksamkeitswert entsteht.

Es versteht sich, dass auch die Ausführungsformen der Figuren 5 und 7 bei Bedarf mit einer thermochromen Untergrundschicht kombiniert werden können, um eine weitere Interaktionsmöglichkeit zu schaffen.

Bei den bisher beschriebenen Gestaltungen erfolgt die Echtheitsprüfung des auf die Banknote 10 aufgebrachten Sicherheitselements jeweils mit einer separaten Verifikationseinrichtung 20. Es ist jedoch auch möglich, für die Echtheitsprüfung ein Verifikationselement auf der Banknote selbst vorzusehen, so dass das Sicherheitselement und das Verifikationselement eine zusammengehörige Sicherheitsanordnung bilden, wie nunmehr anhand des Ausführungsbeispiels der Fig. 8 erläutert.

Die in Fig. 8(a) gezeigte Banknote 90 enthält ein Sicherheitselement 92 der oben beschriebenen Art sowie ein Verifikationselement 94, das bezüglich der Mittellinie 96 der Banknote 90 spiegelsymmetrisch zu dem Sicherheitselement 92 aufgebracht ist. Das Verifikationselement 94 weist einen Magnetbereich 98 auf, in dem magnetisches Material mit einer Magnetisierung senkrecht zur Papierebene und in Form eines gewünschten Motivs, wie etwa des in Fig. 8(a) beispielhaft dargestellten Wappens, vorliegt. Die Motivform des Magnetbereichs 98 kann offen sichtbar sein oder auch verdeckt sein, beispielsweise durch einen dunklen Überdruck.

Durch Falten der Banknote 90 um die Mittellinie 96 kommt das Verifikationselement 94 mit dem Magnetbereich 98 auf dem Sicherheitselement 92 zu liegen, wie in Fig. 8(b) gezeigt. Die Magnetisierung des Magnetbereichs 98 verändert dann den visuellen Eindruck des Sicherheitselements 92 in der oben beschriebenen Art interaktiv und reversibel. Beispielsweise kann sich das visuelle Erscheinungsbild des Sicherheitselements 92 von einem gleichmäßigen metallischen Glanz mit schwach ausgeprägtem, einheitlichem Farbkippeffekt (Fig. 8(a)) zu einer Motivdarstellung eines Wappens wandeln, bei dem das Innere des Wappens dunkel und mit einem brillanten, deutlich ausgeprägten Farbkippeffekt hervortritt. Im Inneren des Wappens können auch weitere Informationen, wie etwa die Denomination der Banknote, sichtbar werden. Die Banknote 90 kann daher durch einfaches Falten auf Echtheit geprüft werden, ohne dass externe Verifikationsmittel erforderlich wären.

Werden das Sicherheitselement und das Verifikationselement auf demselben Datenträger angeordnet, bietet es sich besonders an, das bei der Echtheitsprüfung in Erscheinung tretende Motiv auf ein auf dem Datenträger offen sichtbares Motiv, wie etwa die Denomination einer Banknote, ein aufgedrucktes Logo oder dergleichen, abzustimmen, da die Echtheitsprüfung für den Benutzer dann selbsterklärend und eine besonders leichte Erkennbarkeit und Überprüfbarkeit gewährleistet ist.

Weitere interessante Effekte lassen sich mit Gestaltungen erzeugen, in denen die optisch variable Farbschicht 40 mit einer magnetischen Untergrundschicht kombiniert ist, die vollflächig oder in Form von Mustern, Zeichen oder einer Codierung vorliegen kann. Bei dem Sicherheitselement 110 der Fig. 10 ist auf einem Substrat 112 aus Papier oder Folie eine magnetische Untergrundschicht 114 aufgebracht, die in Form eines gewünschten Motivs Bereiche 116 mit einer weichmagnetischen Substanz 120 niedriger oder vernachlässigbarer Remanenz aufweist. Über der magnetischen Untergrundschicht 114 ist eine optisch variable Farbschicht 40 mit verkapselten, magnetisch ausrichtbaren Effektpigmenten 122 der oben beschriebenen Art angeordnet. Die ebenfalls vorhandenen ersten Effektpigmente sind der übersichtlicheren Darstellung halber in Fig. 10 nicht gezeigt.

Ohne äußeres Magnetfeld ist bei isotroper Ausrichtung der Effektpigmente 122 das von der magnetischen Untergrundschicht 114 gebildete Motiv nicht zu erkennen. Wird das Sicherheitselement 110 nun dem Magnetfeld eines externen Magneten 124 ausgesetzt, so schirmt die magnetische Untergrundschicht 114 in den Bereichen 116 das externe Magnetfeld weitgehend ab. Die magnetisch ausrichtbaren Effektpigmente 122 werden in diesen Bereichen 116 somit nicht oder nur wenig beeinflusst und verbleiben im Wesentlichen in ihrer isotropen Ausgangsorientierung. Dagegen richten sich die Effektpigmente 122 in den nicht abgeschirmten Bereichen 118 wie oben beschrieben entlang der Magnetfeldlinien aus.

In Zusammenspiel mit den optisch variablen ersten Effektpigmenten und/ oder weiteren Untergrundschichten ergibt sich im Ergebnis ein unterschiedliches visuelles Erscheinungsbild der Bereiche 116 und 118, so dass das von der magnetischen Untergrundschicht 114 gebildete Motiv für den Betrachter sichtbar wird. Nach Entfernen des externen Magneten 124 bleibt in der magnetischen Untergrundschicht 114 aufgrund der niedrigen Remanenz des magnetischen Materials 120 keine Magnetisierung zurück, so dass die Effektpigmente 122 wieder in ihre Ausgangslage zurückkehren und das angezeigte Motiv wieder verschwindet.

Die Verifikation kann dabei mit einem beliebigen Magneten 124 erfolgen, da das angezeigte Motiv in der magnetischen Untergrundschicht 114 des Sicherheitselements 110 selbst gespeichert ist. Geeignet sind insbesondere überall leicht verfügbare Permanentmagneten, wie sie in Mobiltelefonen, tragbaren Audioabspielgeräten oder Warensicherungssystemen eingebaut sind.

Fig. 11 zeigt ein Sicherheitselement 130 nach einer Abwandlung der Gestaltung der Fig. 10, bei der die magnetische Untergrundschicht 132 vollflächig eine magnetische Substanz mit mittlerer bis hoher Koerzitivfeldstärke (50 kA/m bis 300 kA/m) enthält.

Die magnetische Untergrundschicht 132 wurde anfänglich durch einen starken Permanentmagneten in Form eines gewünschten Motivs mit Bereichen hoher Feldstärke bzw. sehr niedriger Feldstärke magnetisiert. Aufgrund der Remanenz des magnetischen Materials 132 bleibt auch nach Wegfall des äußeren Magnetfelds eine entsprechende Magnetisierung mit Bereichen hoher Magnetisierung 134 bzw. sehr niedriger Magnetisierung 136 in der Untergrundschicht 132 zurück. Die Feldstärke der Bereiche hoher Magnetisierung 134 ist dabei groß genug, um die reversibel ausrichtbaren zweiten Effektpigmente 122 in ihrer Position zu halten, während die Orientierung der zweiten Effektpigmente 122 in den Bereichen sehr niedriger Magnetisierung 136 im Wesentlichen isotrop bleibt. Das anfänglich eingeprägte magnetische Muster 134, 136 bleibt daher erhalten.

In einer weiteren Variante kann die magnetische Untergrundschicht 132 auch eine magnetische Substanz mit sehr hoher Koerzitivfeldstärke von mehr als 300 kA/m enthalten. Ein so hartes magnetisches Material kann nur noch mit sehr starken Magnetfeldern ummagnetisiert werden, so dass ein anfänglich eingebrachtes Muster bei normaler Benutzung dauerhaft erhalten bleibt.

## Patentansprüche

1. Optisch variables Sicherheitselement (12) zur Absicherung von Wertgegenständen (10) mit einer optisch variablen Farbschicht (40), die erste, optisch variable Effektpigmente (34) zur Erzeugung eines betrachtungswinkelabhängigen visuellen Eindrucks enthält, und die zweite, durch ein äußeres Magnetfeld reversibel ausrichtbare Effektpigmente (36) enthält, wobei der Grad der Ausprägung des betrachtungswinkelabhängigen visuellen Eindrucks der optisch variablen Effektpigmente (34) von der Orientierung der magnetisch ausrichtbaren Effektpigmente (36) relativ zur Ebene der Farbschicht (40) abhängt.

2. Sicherheitselement (12) nach Anspruch 1, **dadurch gekennzeichnet, dass** die zweiten Effektpigmente (36) in einer Mikrokapsel (38) verkapselt sind und in der Mikrokapsel (38) im Wesentlichen frei drehbar sind.

3. Sicherheitselement (12) nach Anspruch 2, **dadurch gekennzeichnet, dass** die zweiten Effektpigmente (36) innerhalb ihrer Mikrokapsel (38) ohne äußeres Magnetfeld im Wesentlichen isotrop ausgerichtet sind, wobei die Mikrokapseln (38) bevorzugt ein Gel, insbesondere ein gequollenes, polymeres Gel enthalten, das eine Rückstellkraft für die magnetisch ausrichtbaren Effektpigmente bereitstellt.

4. Sicherheitselement (12) nach wenigstens einem der Ansprüche 2 bis 3, **dadurch gekennzeichnet, dass** die ersten Effektpigmente (34) außerhalb der Mikrokapseln (38) der zweiten Effektpigmente (36) vorliegen.

5. Sicherheitselement (12) nach wenigstens einem der Ansprüche 2 bis 3, **dadurch gekennzeichnet, dass** die ersten Effektpigmente (34) gemeinsam mit den zweiten Effektpigmenten (36) in den Mikrokapseln (38) verkapselt sind, wobei die ersten und zweiten Effektpigmente (34, 36) bevorzugt durch dieselben magnetisch ausrichtbaren und optisch variablen Effektpigmente gebildet sind.

6. Sicherheitselement (12) nach wenigstens einem der Ansprüche 1 bis 5, **dadurch gekennzeichnet, dass** die zweiten Effektpigmente (36) auf Basis von hochreinem Eisenpulver gebildet sind und/oder dass die zweiten Effektpigmente (36) weichmagnetisch oder hartmagnetisch sind.

7. Sicherheitselement (12) nach wenigstens einem der Ansprüche 1 bis 6, **dadurch gekennzeichnet, dass** die zweiten Effektpigmente (36) nicht-sphärisch, insbesondere plättchenförmig ausgebildet sind, wobei das Verhältnis des größten zum kleinsten Durchmesser (Durchmesser-zu-Dickenverhältnis) der nicht-sphärischen zweiten Effektpigmente (36) insbesondere mehr als 5:1, bevorzugt mehr als 10:1 beträgt und besonders bevorzugt zwischen 40:1 und 400:1 liegt.

8. Sicherheitselement (12) nach Anspruch 7, **dadurch gekennzeichnet, dass** der größte Durchmesser der nicht-sphärischen zweiten Effektpigmente (36) mehr als 2 µm, bevorzugt mehr als 5 µm, besonders bevorzugt mehr als 10 µm und ganz besonders bevorzugt mehr als 15 µm beträgt.

9. Sicherheitselement (12) nach wenigstens einem der Ansprüche 1 bis 8, **dadurch gekennzeichnet, dass** die zweiten Effektpigmente (36) durch in Mikrokapseln vorliegende, isotrope Partikel gebildet sind, die sich durch ein äußeres Magnetfeld in den Mikrokapseln kooperativ, insbesondere kettenförmig ausrichten.

10. Sicherheitselement (12) nach wenigstens einem der Ansprüche 1 bis 9, **dadurch gekennzeichnet, dass** die ersten Effektpigmente (34) auf Basis von flüssigkristallinen Polymeren hergestellte Pigmente oder durch Perlglanzpigmente oder durch Interferenzschichtpigmente gebildet sind, wobei die Interferenzschichtpigmente bevorzugt zumindest eine Reflexionsschicht, eine Absorberschicht und eine zwischen der Reflexionsschicht und der Absorberschicht angeordnete dielektrische Abstandsschicht enthalten.

11. Sicherheitselement (12) nach wenigstens einem der Ansprüche 1 bis 10, **dadurch gekennzeichnet, dass** die zweiten Effektpigmente (36) in Mikrokapseln (38) verkapselt sind und die Mikrokapseln (38) einen aktivierbaren Fixierstoff enthalten, durch dessen Aktivierung die zweiten Effektpigmente (36) in einer gewünschten Position fixierbar sind, wobei die Mikrokapseln (38) als aktivierbaren Fixierstoff bevorzugt eine transparente polymerisierbare Substanz oder Mischung aus Oligomeren und Monomeren sowie einen Initiator, vorzugsweise einen Photoinitiator, für die Aktivierung des Fixierstoffs enthalten, oder dass die Mikrokapseln (38) als aktivierbaren Fixierstoff eine durch Einwirkung von Laserstrahlung aufschäumbare Substanz enthalten.

12. Sicherheitselement (12) nach wenigstens einem der Ansprüche 1 bis 11, **dadurch gekennzeichnet, dass** die zweiten Effektpigmente (36) in Mikrokapseln (38) verkapselt sind, die einen Durchmesser zwischen 1 µm und 200 µm, vorzugsweise zwischen 1 µm und 80 µm aufweisen und/ oder dass die zweiten Effektpigmente (36) in Mikrokapseln (38) verkapselt sind, deren Wandstärke zwischen 5 % und 30 %, vorzugsweise zwischen 10 % und 20 % des Durchmessers der Mikrokapseln (38) beträgt.

13. Sicherheitselement (12) nach wenigstens einem der Ansprüche 1 bis 12, **dadurch gekennzeichnet, dass** die optisch variable Farbschicht (40) weiter dritte, unverkapselte und magnetisch ausrichtbare Effektpigmente (62, 64) enthält, die magnetisch in Form eines vorgegebenen Motivs in Form von Mustern, Linien, Zeichen oder einer Codierung ausgerichtet sind, wobei die verkapselten zweiten und die unverkapselten dritten Effektpigmente (36, 62, 64) zumindest teilweise in denselben Bereichen oder in voneinander getrennten Bereichen der optisch variablen Farbschicht (40) vorliegen.

14. Sicherheitselement (12) nach wenigstens einem der Ansprüche 1 bis 13, **dadurch gekennzeichnet, dass** die optisch variable Farbschicht (40) ein Pigmentgemisch mit den ersten Effektpigmenten (34), den verkapselten zweiten Effektpigmenten (36) und gegebenenfalls den unverkapselten dritten Effektpigmenten (62, 64) enthält oder dass die optisch variable Farbschicht eine reine Magnetschicht mit den zweiten Effektpigmenten (36) und eine über der reinen Magnetschicht angeordnete reine Farbschicht mit den ersten Effektpigmenten (34) enthält.

15. Sicherheitselement (12) nach wenigstens einem der Ansprüche 1 bis 14, **dadurch gekennzeichnet, dass** die optisch variable Farbschicht (40) auf einer informationsführenden Untergrundschicht (32), insbesondere einer Siebdruck-, Flexodruckschicht oder einer Stichtiefdruckschicht aufgebracht ist und/ oder dass die optisch variable Farbschicht mit einer thermochromen (58) oder magnetischen Untergrundschicht (114,132) kombiniert ist, wobei die magnetische Untergrundschicht (114,132) bevorzugt in Form von Mustern, Zeichen oder einer Codierung vorliegt.

16. Sicherheitselement (12) nach wenigstens einem der Ansprüche 1 bis 15, **dadurch gekennzeichnet, dass** das Sicherheitselement zweite Effektpigmente (36) aufweist, die durch das Magnetfeld des Permanentmagneten eines Mobiltelefons, eines tragbaren Audioabspielgeräts oder eines Warensicherungssystems ausrichtbar sind.

17. Verfahren zum Herstellen eines optisch variablen Sicherheitselements (12) zur Absicherung von Wertgegenständen, bei dem auf ein Substrat eine optisch variable Farbschicht (40) aufgebracht wird, die erste, optisch variable Effektpigmente (34) zur Erzeugung eines betrachtungswinkelabhängigen visuellen Eindrucks enthält, und die zweite, durch ein äußeres Magnetfeld reversibel ausrichtbare Effektpigmente (36) enthält, wobei der Grad der Ausprägung des betrachtungswinkelabhängigen visuellen Eindrucks der optisch variablen Effektpigmente (34) von der Orientierung der magnetisch ausrichtbaren Effektpigmente (36) relativ zur Ebene der Farbschicht (40) abhängt.

18. Verfahren nach Anspruch 17, **dadurch gekennzeichnet, dass** die zweiten Effektpigmente (36) in einer Mikrokapsel (38) zusammen mit einem aktivierbaren Fixierstoff verkapselt werden, und die verkapselten zweiten Effektpigmente (36) durch Aktivierung des aktivierbaren Fixierstoffs teilweise oder vollständig in einer gewünschten Position fixiert werden, wobei die zweiten Effektpigmente (36) bevorzugt durch lokale UV-Bestrahlung oder durch lokale Laserbestrahlung in Teilbereichen in Form von Mustern, Zeichen oder einer Codierung in einer gewünschten Position fixiert werden.

19. Sicherheitsanordnung zur Absicherung von Sicherheitspapieren, Wertdokumenten, Datenträgern und dergleichen mit einem Sicherheitselement (12) nach einem der Ansprüche 1 bis 18 und mit einem Verifikationselement mit einem magnetischen Motivbereich, in dem magnetisches Material in Form von Mustern, Linien, Zeichen oder einer Codierung vorliegt, wobei der magnetische Motivbereich bevorzugt im Wesentlichen senkrecht zur Ebene des Verifikationselements magnetisiert ist.

20. Datenträger mit einem Sicherheitselement (12) nach einem der Ansprüche 1 bis 18 oder Datenträger mit einer Sicherheitsanordnung nach Anspruch 19, wobei das Sicherheitselement (12) und das Verifikationselement bevorzugt geometrisch so auf dem Datenträger angeordnet sind, dass das Sicherheitselement (12) durch Biegen oder Falten des Datenträgers über das Verifikationselement bringbar ist.

## Claims

1. An optically variable security element (12) for securing valuable articles (10), having an optically variable ink layer (40) that includes first, optically variable effect pigments (34) for producing a viewing-angle-dependent visual impression, and that includes second effect pigments (36) (36) that are reversibly alignable by an external magnetic field, the degree of markedness of the viewing-angle-dependent visual impression of the optically variable effect pigments (34) depending on the orientation of the magnetically alignable effect pigments (36) relative to the plane of the ink layer (40).

2. The security element (12) according to claim 1, **characterized in that** the second effect pigments (36) are encapsulated in a microcapsule (38) and are substantially freely rotatable in the microcapsule (38).

3. The security element (12) according to claim 2, **characterized in that** the second effect pigments (36) are aligned substantially isotropically within their microcapsule (38) without an external magnetic field, wherein the microcapsules (38) preferably include a gel, especially a swollen, polymeric gel that provides a restoring force for the magnetically alignable effect pigments.

4. The security element (12) according to at least one of claims 2 to 3, **characterized in that** the first effect pigments (34) are present outside the microcapsules (38) of the second effect pigments (36).

5. The security element (12) according to at least one of claims 2 to 3, **characterized in that** the first effect pigments (34) are encapsulated in the microcapsules (38) together with the second effect pigments (36), wherein the first and second effect pigments (34, 36) are formed preferably by the same magnetically alignable and optically variable effect pigments.

6. The security element (12) according to at least one of claims 1 to 5, **characterized in that** the second effect pigments (36) are formed on the basis of high-purity iron powder and/ or that the second effect pigments (36) are magnetically soft or magnetically hard.

7. The security element (12) according to at least one of claims 1 to 6, **characterized in that** the second effect pigments (36) are developed to be non-spherical, especially platelet-like, wherein the ratio of the largest diameter to the smallest diameter (diameter-to-thickness ratio) of the non-spherical second effect pigments (36) is especially more than 5:1, preferably more than 10:1, and is particularly preferably between 40:1 and 400:1.

8. The security element (12) according to claim 7, **characterized in that** the largest diameter of the non-spherical second effect pigments (36) is more than 2 µm, preferably more than 5 µm, particularly preferably more than 10 µm and very particularly preferably more than 15 µm.

9. The security element (12) according to at least one of claims 1 to 8, **characterized in that** the second effect pigments (36) are formed by isotropic particles that are present in microcapsules and that align cooperatively, especially chain-like, in the microcapsules through an external magnetic field.

10. The security element (12) according to at least one of claims 1 to 9, **characterized in that** the first effect pigments (34) are pigments manufactured on the basis of liquid crystal polymers or formed by pearlescent pigments or by interference layer pigments, wherein the interference layer pigments preferably include at least one reflection layer, one absorber layer and one dielectric spacing layer arranged between the reflection layer and the absorber layer.

11. The security element (12) according to at least one of claims 1 to 10, **characterized in that** the second effect pigments (36) are encapsulated in microcapsules (38) and the microcapsules (38) include an activatable fixative through whose activation the second effect pigments (36) are fixable in a desired position, wherein the microcapsules (38) include, as the activatable fixative, a transparent polymerizable substance or mixture of oligomers and monomers, as well as an initiator, preferably a photoinitiator, for the activation of the fixative, or that the microcapsules (38) include, as the activatable fixative, a substance that is foamable by the action of laser radiation.

12. The security element (12) according to at least one of claims 1 to 11, **characterized in that** the second effect pigments (36) are encapsulated in microcapsules (38) that exhibit a diameter between 1 µm and 200 µm, preferably between 1 µm and 80 µm, and/or that the second effect pigments (36) are encapsulated in microcapsules (38) whose wall thickness is between 5% and 30%, preferably between 10% and 20% of the diameter of the microcapsules (38).

13. The security element (12) according to at least one of claims 1 to 12, **characterized in that** the optically variable ink layer (40) further includes third, unencapsulated and magnetically alignable effect pigments (62, 64) that are aligned magnetically in the form of a specified motif in the form of patterns, lines, characters or a code, wherein the encapsulated second and the unencapsulated third effect pigments (36, 62, 64) are present at least partially in the same regions of the optically variable ink layer (40).

14. The security element (12) according to at least one of claims 1 to 13, **characterized in that** the optically variable ink layer (40) includes a pigment mixture having the first effect pigments (34), the encapsulated second effect pigments (36) and, if applicable, the unencapsulated third effect pigments (62, 64), or that the optically variable ink layer includes a purely magnetic layer having the second effect pigments (36) and, arranged over the purely magnetic layer, a purely ink layer having the first effect pigments (34).

15. The security element (12) according to at least one of claims 1 to 14, **characterized in that** the optically variable ink layer (40) is applied on an information-bearing background layer (32), especially a screen printing layer, flexo printing layer or an intaglio printing layer, and/ or that the optically variable ink layer is combined with a thermochromic (58) or magnetic background layer (114,132), wherein the magnetic background layer (114, 132) is preferably present in the form of patterns, characters or a code.

16. The security element (12) according to at least one of claims 1 to 15, **characterized in that** the security element comprises second effect pigments (36) that are alignable by the magnetic field of the permanent magnet of a mobile phone, a portable audio playback device or a product security system.

17. A method for manufacturing an optically variable security element (12) for securing valuable articles, in which, on a substrate, an optically variable ink layer (40) is applied that includes first, optically variable effect pigments (34) for producing a viewing-angle-dependent visual impression, and that includes second effect pigments (36) that are reversibly alignable by an external magnetic field, the degree of markedness of the viewing-angle-dependent visual impression of the optically variable effect pigments (34) depending on the orientation of the magnetically alignable effect pigments (36) relative to the plane of the ink layer (40).

18. The method according to claim 17, **characterized in that** the second effect pigments (36) are encapsulated in a microcapsule (38) together with an activatable fixative, and the encapsulated second effect pigments (36) are partially or completely fixed in a desired position by activating the activatable fixative, wherein the second effect pigments (36) are preferably fixed in a desired position in sub-regions in the form of patterns, characters or a code through local UV irradiation or through local laser irradiation.

19. A security arrangement for securing security papers, value documents, data carriers and the like having a security element (12) according to one of claims 1 to 18 and having a verification element having a magnetic motif region in which magnetic material is present in the form of patterns, lines, characters or a code, wherein the magnetic motif region is preferably magnetized substantially vertically to the plane of the verification element.

20. A data carrier having a security element (12) according to one of claims 1 to 18, or a data carrier having a security arrangement according to claim 19, wherein the security element (12) and the verification element are preferably geometrically arranged on the data carrier in such a way that the security element (12) is bringable over the verification element by bending or folding the data carrier.

## Revendications

1. Elément de sécurité optiquement variable (12) pour la protection d'objets de valeur (10), comportant une couche de couleur optiquement variable (40), qui contient des premiers pigments à effets optiquement variables (34) pour la production d'une impression visuelle dépendant de l'angle d'observation, et qui contient des deuxièmes pigments à effets (36), pouvant subir une orientation réversible sous l'effet d'un champ magnétique extérieur, le degré d'expression de l'impression visuelle dépendant de l'angle d'observation des pigments à effets optiquement variables (34) dépendant de l'orientation des pigments à effets (36) magnétiquement orientables par rapport au plan de la couche de couleur(40).

2. Elément de sécurité (12) selon la revendication 1, **caractérisé en ce que** les deuxièmes pigments à effets (36) sont encapsulés dans une microcapsule (38) et pour l'essentiel peuvent tourner librement à l'intérieur de la microcapsule (38).

3. Elément de sécurité (12) selon la revendication 2, **caractérisé en ce que** les deuxièmes pigments à effets (36) sont orientés pour l'essentiel d'une manière isotrope à l'intérieur de leur microcapsule (38) sans champ magnétique extérieur, les microcapsules (38) contenant de préférence un gel, en particulier un gel polymère gonflé, qui met à disposition une force de rappel pour les pigments à effets magnétiquement orientables.

4. Elément de sécurité (12) selon au moins l'une des revendications 2 à 3, **caractérisé en ce que** les premiers pigments à effets (34) se trouvent à l'extérieur des microcapsules (38) des deuxièmes pigments à effets (36).

5. Elément de sécurité (12) selon au moins l'une des revendications 2 à 3, **caractérisé en ce que** les premiers pigments à effets (34) sont, en même temps que les deuxièmes pigments à effets (36), encapsulés dans les microcapsules (38), les premiers et les deuxièmes pigments à effets (34, 36) étant de préférence formés par ces mêmes pigments à effets magnétiquement orientables et optiquement variables.

6. Elément de sécurité (12) selon au moins l'une des revendications 1 à 5, **caractérisé en ce que** les deuxièmes pigments à effets (36) sont formés sur la base d'une poudre de fer de haute pureté, et/ou que les deuxièmes pigments à effets (36) sont magnétiques doux ou magnétiques durs.

7. Elément de sécurité (12) selon au moins l'une des revendications 1 à 6, **caractérisé en ce que** les deuxièmes pigments à effets (36) ont une configuration non sphérique, en particulier lamellaire, le rapport du diamètre le plus grand au diamètre le plus petit (rapport diamètre/épaisseur) des deuxièmes pigments à effets non sphériques (36) étant en particulier supérieur à 5:1, de préférence supérieur à 10:1 et d'une manière particulièrement préférée compris entre 40:1 et 400:1.

8. Elément de sécurité (12) selon la revendication 7, **caractérisé en ce que** le diamètre le plus grand des deuxièmes pigments à effets non sphériques (36) est supérieur à 2 µm, de préférence supérieur à 5 µm, d'une manière particulièrement préférée supérieur à 10 µm et d'une manière tout particulièrement préférée supérieur à 15 µm.

9. Elément de sécurité (12) selon au moins l'une des revendications 1 à 8, **caractérisé en ce que** les deuxièmes pigments à effets (36) sont formés par des particules isotropes se trouvant dans des microcapsules, particules qui sous l'effet d'un champ magnétique extérieur s'orientent dans les microcapsules d'une manière coopérative, en particulier sous la forme d'une chaîne.

10. Elément de sécurité (12) selon au moins l'une des revendications 1 à 9, **caractérisé en ce que** les premiers pigments à effets (34) sont formés sur la base de pigments fabriqués à partir de polymères cristaux liquides, ou par des pigments nacrés, ou par des pigments à couche d'interférence, les pigments à couche d'interférence contenant de préférence au moins une couche réfléchissante, une couche absorbante, et une couche d'écartement diélectrique disposée entre la couche réfléchissante et la couche absorbante.

11. Elément de sécurité (12) selon au moins l'une des revendications 1 à 10, **caractérisé en ce que** les deuxièmes pigments à effets (36) sont encapsulés dans des microcapsules (38), et les microcapsules (38) contiennent un agent de fixation activable, sous l'effet de l'activation duquel les deuxièmes pigments à effets (36) peuvent être fixés dans une position souhaitée, les microcapsules (38) contenant en tant qu'agent de fixation activable de préférence une substance polymérisable transparente ou un mélange d'oligomères et de monomères, ainsi qu'un amorceur, de préférence un photoamorceur, pour l'activation de l'agent de fixation, ou que les microcapsules (38) contiennent en tant qu'agent de fixation activable une substance expansible sous l'action d'un rayonnement laser.

12. Elément de sécurité (12) selon au moins l'une des revendications 1 à 11, **caractérisé en ce que** les deuxièmes pigments à effets (36) sont encapsulés dans des microcapsules (38) qui présentent un diamètre compris entre 1 µm et 200 µm, de préférence entre 1 µm et 80 µm, et/ou que les deuxièmes pigments à effets (36) sont encapsulés dans des microcapsules (38) dont l'épaisseur de paroi est comprise entre 5 et 30 %, de préférence entre 10 et 20 % du diamètre des microcapsules (38).

13. Elément de sécurité (12) selon au moins l'une des revendications 1 à 12, **caractérisé en ce que** la couche de couleur optiquement variable (40) contient encore des troisièmes pigments à effets (62, 64), non encapsulés et magnétiquement orientables, qui sont magnétiquement orientés sous forme d'un motif prédéfini sous forme de modèles, de lignes, de caractères ou d'un codage, les deuxièmes pigments à effets encapsulés, et les troisièmes pigments à effets non encapsulés (36, 62, 64) se présentant au moins partiellement dans les mêmes zones, ou dans des zones séparées les unes des autres de la couche de couleur optiquement variable (40).

14. Elément de sécurité (12) selon au moins l'une des revendications 1 à 13, **caractérisé en ce que** la couche de couleur optiquement variable (40) contient un mélange de pigments constitué des premiers pigments à effet (34), des deuxièmes pigments à effets encapsulés (36) et éventuellement des troisièmes pigments à effets non encapsulés (62, 64), ou que la couche de couleur optiquement variable contient une couche magnétique pure, constituée des deuxièmes pigments à effets (36) et d'une couche de couleur pure, disposée au-dessus de la couche magnétique pure, comportant les premiers pigments à effets (34).

15. Elément de sécurité (12) selon au moins l'une des revendications 1 à 14, **caractérisé en ce que** la couche de couleur optiquement variable (40) est appliquée sur une couche sous-jacente (32) conductrice d'informations, en particulier une couche obtenue par sérigraphie, par impression flexographique ou par impression en taille douce, et/ou que la couche de couleur optiquement variable est combinée à une couche sous-jacente thermochromique (58) ou magnétique (114, 132), la couche sous-jacente magnétique (114, 132) se présentant de préférence sous forme de modèles, de caractères ou d'un codage.

16. Elément de sécurité (12) selon au moins l'une des revendications 1 à 15, **caractérisé en ce que** l'élément de sécurité comprend des deuxièmes pigments à effets (36), qui peuvent être orientés sous l'effet du champ magnétique de l'aimant permanent d'un téléphone mobile, d'un lecteur audio portable ou d'un système de surveillance électronique d'articles.

17. Procédé de fabrication d'un élément de sécurité optiquement variable (12) pour la protection d'objets de valeur, dans lequel on applique sur un substrat une couche de couleur optiquement variable (40), qui contient des premiers pigments à effets optiquement variables (34) pour la production d'une impression visuelle dépendant de l'angle d'observation, et qui contient des deuxièmes pigments à effets (36), pouvant être orientés d'une manière réversible par un champ magnétique extérieur, le degré d'expression de l'impression visuelle dépendant de l'angle d'observation des pigments à effets optiquement variables (34) dépendant de l'orientation des pigments à effets magnétiquement orientables (36) par rapport au plan de la couche de couleur (40).

18. Procédé selon la revendication 17, **caractérisé en ce que** les deuxièmes pigments à effets (36) sont encapsulés dans une microcapsule (38) en même temps qu'un agent de fixation activable, et les deuxièmes pigments à effets encapsulés (36) sont en totalité ou en partie fixés dans une position souhaitée sous l'effet de l'activation de l'agent de fixation activable, les deuxièmes pigments à effets (36) étant fixés dans une position souhaitée de préférence sous l'effet d'un rayonnement UV local ou sous l'effet d'un rayonnement laser local dans des zones partielles sous forme de modèles, de caractères ou d'un codage.

19. Arrangement de sécurité pour la protection de papiers de sécurité, de documents de valeurs, de supports de données et analogues, comportant un élément de sécurité (12) selon l'une des revendications 1 à 18, et un élément de vérification comportant une zone à motifs magnétique, dans laquelle un matériau magnétique est présent sous forme de modèles, de lignes, de caractères ou d'un codage, la zone magnétique de motifs étant magnétisée de préférence pour l'essentiel perpendiculairement au plan de l'élément de vérification.

20. Support de données comportant un élément de sécurité (12) selon l'une des revendications 1 à 18, ou support de données comportant un arrangement de sécurité selon la revendication 19, l'élément de sécurité (12) et l'élément de vérification étant disposés de préférence géométriquement sur le support de données de telle sorte que l'élément de sécurité puisse être placé au-dessus de l'élément de vérification par cintrage ou repliement du support de données.
